# EUROPEAN PATENT APPLICATION

(11) **EP 4 814 666 A1**
(43) Date of publication of application: **30.09.2026**
(21) Application number: 25738863.7
(22) Date of filing: 03.01.2025
(51) Int. Cl.: G06F 3/01, G06F 3/00, G06T 19/00, G06F 1/16, G06F 3/04817, G06F 3/0482, G06V 40/18, G06V 40/20, H04W 4/80

(54) **WEARABLE ELECTRONIC DEVICE AND CONTROL METHOD FOR SAME WEARABLE ELECTRONIC DEVICE**

(30) Priority: 09.01.2024 KR 20240003289; 31.01.2024 KR 20240014956
(71) Applicant: Samsung Electronics Co., Ltd., Suwon-si, Gyeonggi-do 16677 (KR)
(72) Inventor: LEE, Byunghwa, Suwon-si, Gyeonggi-do 16677 (KR); LEE, Joayoung, Suwon-si, Gyeonggi-do 16677 (KR); HAN, Hoon, Suwon-si, Gyeonggi-do 16677 (KR)
(74) Representative: Gulde & Partner
(86) International application number: PCT/KR2025/000154
(87) International publication number: WO 2025/150788

(57) **Abstract**

A wearable electronic device according to various embodiments of the present invention comprises: a display; at least one camera; a communication circuit; a processor; and a memory for storing instructions, wherein the instructions, when executed by the processor, cause the wearable electronic device to: perform pairing with an external electronic device through the communication circuit; recognize the external electronic device viewed through the at least one camera; transmit, to the external electronic device, information related to gaze coordinates and/or gesture coordinates of a user of the wearable electronic device; receive, from the external electronic device, a first execution screen played in the external electronic device through mirroring on the basis of the information related to the gaze coordinates and/or the gesture coordinates; and display, through the display, an extended screen of the first execution screen received from the external electronic device, wherein the extended screen of the first execution screen may be configured to be controllable through a gaze and/or a gesture of the user of the wearable electronic device, and the external electronic device may be configured to be controllable through a paired peripheral device.

## Description

### [Technical Field]

Various embodiments of the disclosure provide a wearable electronic device and a method for controlling the wearable electronic device.

### [Background Art]

Use of wearable electronic devices is increasing, and various functions are being provided to such wearable electronic devices.

For example, the wearable electronic device may include various types such as virtual reality (VR) glasses, video see-through (VST) mixed reality (MR) glasses, or a head mounted display (HMD).

The wearable electronic device may provide various virtual reality experiences through the display module. A user may engage in various virtual reality experiences provided by the wearable electronic device.

The above-described information may be provided as background technology for the purpose of helping to understand the disclosure. None of the above descriptions are intended to suggest or determine whether any of them may be applied as prior art in connection with the disclosure.

### [Disclosure of Invention]

### [Technical Problem]

The wearable electronic device may visually provide content (e.g., a screen for executing an application) provided from the external electronic device to a virtual space. A user may perform various experiences through interaction with content provided in the virtual space.

The content displayed through the display module (e.g., a display) of the wearable electronic device may not be controllable by the user's gaze and/or gestures.

In case that a user wears a wearable electronic device, the wearable electronic device may not automatically perform connection, reconnection, and/or disconnection with an external electronic device within a specific communication-available range.

Various embodiments of the disclosure may provide a wearable electronic device and a method capable of controlling, through a user's gaze and/or gesture, a screen (e.g., an execution screen of content) provided through a display (e.g., a display module).

According to various embodiments of the disclosure, in case that the user wears the wearable electronic device, the wearable electronic device may provide a method of automatically connecting, re-connecting, and/or disconnecting an external electronic device and/or a peripheral device within a specific range.

The technical problems to be achieved in the disclosure are not limited to the above-described technical problems, and other technical problems which are not mentioned may be clearly understood by those skilled in the art from the descriptions below.

### [Solution to Problem]

A wearable electronic device according to an embodiment of the disclosure may include a display, at least one camera, a communication circuit, at least one processor, and a memory for storing instructions. According to an embodiment, the instructions, when executed by the at least one processor, may cause the wearable electronic device to perform pairing with an external electronic device through the communication circuit, recognize the external electronic device viewed through the at least one camera, transfer, to the external electronic device, information related to gaze coordinates and/or gesture coordinates of a user of the wearable electronic device, receive, through mirroring from the external electronic device, a first execution screen being reproduced on the external electronic device, based on the information related to the gaze coordinates and/or the gesture coordinates, and display, through the display, an extended screen of the first execution screen received from the external electronic device. According to an embodiment, the extended screen of the first execution screen may be configured to be controllable through a gaze and/or a gesture of the user of the wearable electronic device. According to an embodiment, the external electronic device may be configured to be controllable through a paired peripheral device.

A method for controlling a wearable electronic device according to an embodiment of the disclosure may include performing, by the wearable electronic device, pairing with an external electronic device through a communication circuit. According to an embodiment, the method may include recognizing an external electronic device by the wearable electronic device. According to an embodiment, the method may include transferring information related to gaze coordinates and/or gesture coordinates of a user of the wearable electronic device to the external electronic device. According to an embodiment, the method may include, based on information related to the gaze coordinates and/or the gesture coordinates, receiving a first execution screen being reproduced on the external electronic device through mirroring from the external electronic device. According to an embodiment, the method may include displaying, through the display, an extended screen of the first execution screen received from the external electronic device. According to an embodiment, the method may include controlling the extended screen of the first execution screen through a gaze and/or a gesture of the user of the wearable electronic device. According to an embodiment, the method may include controlling the external electronic device through a peripheral device paired with the external electronic device.

According to an embodiment, the method for controlling the wearable electronic device may be performed by using a non-transitory computer-readable storage medium configured to store one or more programs. One or more programs according to an embodiment may include instructions and/or commands to be performed when executed by at least one processor of the electronic device.

### [Advantageous Effects of Invention]

According to various embodiments of the disclosure, a user of a wearable electronic device may control a screen provided through a display (e.g., a display module) through the user's gaze and/or a gesture.

According to various embodiments of the disclosure, when a user wears a wearable electronic device, the wearable electronic device may automatically connect, reconnect, and/or disconnect with external electronic devices and/or peripheral devices within a specific range.

Furthermore, various other effects that may be directly or indirectly identified through this document may be provided.

### [Brief Description of Drawings]

In describing the drawings, the same or similar components may be designated by the same or similar reference numerals.
FIG. 1 is a block diagram of an electronic device in a network environment according to various embodiments of the disclosure.
FIG. 2 is a block diagram schematically illustrating a configuration of a wearable electronic device according to an embodiment of the disclosure.
FIG. 3 schematically illustrates an embodiment in which a wearable electronic device exchanges content with an external electronic device through mirroring according to an embodiment of the disclosure.
FIG. 4 schematically illustrates an embodiment in which a wearable electronic device exchanges content with an external electronic device through casting according to an embodiment of the disclosure.
FIG. 5 schematically illustrates an embodiment in which a wearable electronic device exchanges content with an external electronic device through streaming according to an embodiment of the disclosure.
FIG. 6 schematically illustrates an embodiment in which a first execution screen is displayed when a second execution screen is not displayed on a display of a wearable electronic device according to an embodiment of the disclosure.
FIG. 7 schematically illustrates an embodiment in which a first execution screen is moved and deformed for display when a second execution screen is displayed on a display of a wearable electronic device according to an embodiment of the disclosure.
FIG. 8 schematically illustrates an embodiment in which a first execution screen and a second execution screen are deformed and displayed when the first execution screen and the second execution screen are displayed on a display of a wearable electronic device according to an embodiment of the disclosure.
FIG. 9 schematically illustrates a first size adjustment icon formed on a first window in an extended screen of a first execution screen displayed on a display of a wearable electronic device according to an embodiment of the disclosure.
FIG. 10 schematically illustrates a second size adjustment icon formed on a second window in an extended screen of a first execution screen displayed on a display of a wearable electronic device according to an embodiment of the disclosure.
FIG. 11 schematically illustrates an embodiment in which sizes of a first window and a second window are adjusted in an extended screen of a first execution screen displayed on a display of a wearable electronic device according to an embodiment of the disclosure.
FIG. 12 schematically illustrates an embodiment in which the recognition range of gaze coordinates may be expanded when a first execution screen displayed on a display of a wearable electronic device according to an embodiment of the disclosure includes three-dimensional content.
FIG. 13 schematically illustrates an embodiment in which at least one application is displayed on a first execution screen displayed on a display of a wearable electronic device according to an embodiment of the disclosure.
FIG. 14 schematically illustrates an embodiment in which an application displayed on a display of a wearable electronic device is popped up when gaze coordinates corresponding to the application are recognized, according to an embodiment of the disclosure.
FIG. 15 schematically illustrates an embodiment in which an application displayed on a display of a wearable electronic device is highlighted when gaze coordinates corresponding to the application are recognized, according to an embodiment of the disclosure.
FIG. 16 schematically illustrates an embodiment in which an application displayed on a display of a wearable electronic device is displayed in an enlarged form when gaze coordinates corresponding to the application are recognized, according to an embodiment of the disclosure.
FIG. 17 is a flowchart schematically illustrating a method for controlling a wearable electronic device according to an embodiment of the disclosure.
FIG. 18 schematically illustrates a login process of a wearable electronic device and at least one external electronic device and a peripheral device according to an embodiment of the disclosure.
FIG. 19 schematically illustrates an embodiment in which at least one external electronic device in a vicinity of a wearable electronic device is identified according to an embodiment of the disclosure.
FIG. 20 schematically illustrates an embodiment in which a wearable electronic device and at least one external electronic device are paired according to an embodiment of the disclosure.
FIG. 21 schematically illustrates an embodiment in which a wearable electronic device and at least one peripheral device are paired according to an embodiment of the disclosure.
FIG. 22 schematically illustrates an embodiment in which multipoint pairing between a wearable electronic device and at least one peripheral device is established according to an embodiment of the disclosure.
FIG. 23 schematically illustrates an embodiment in which a wearable electronic device and at least one peripheral device are paired and the pairing therebetween is released according to an embodiment of the disclosure.
FIG. 24 schematically illustrates an embodiment in which a wearable electronic device, at least one external electronic device, and at least one peripheral device are paired and the pairing is released according to an embodiment of the disclosure.
FIG. 25 schematically illustrates an embodiment related to pairing of a wearable electronic device when at least one external electronic device and at least one peripheral device are in use according to an embodiment of the disclosure.
FIG. 26 schematically illustrates an embodiment in which a wearable electronic device displays a virtual character input device according to an embodiment of the disclosure.
FIG. 27 schematically illustrates an embodiment related to releasing pairing among a wearable electronic device, at least one external electronic device, and at least one peripheral device according to an embodiment of the disclosure.
FIG. 28 schematically illustrates an embodiment in which at least one external electronic device and at least one peripheral device are re-paired according to an embodiment of the disclosure.
FIG. 29 schematically illustrates an embodiment in which at least one peripheral device cannot be re-paired with at least one external electronic device according to an embodiment of the disclosure.

### [Mode for the Invention]

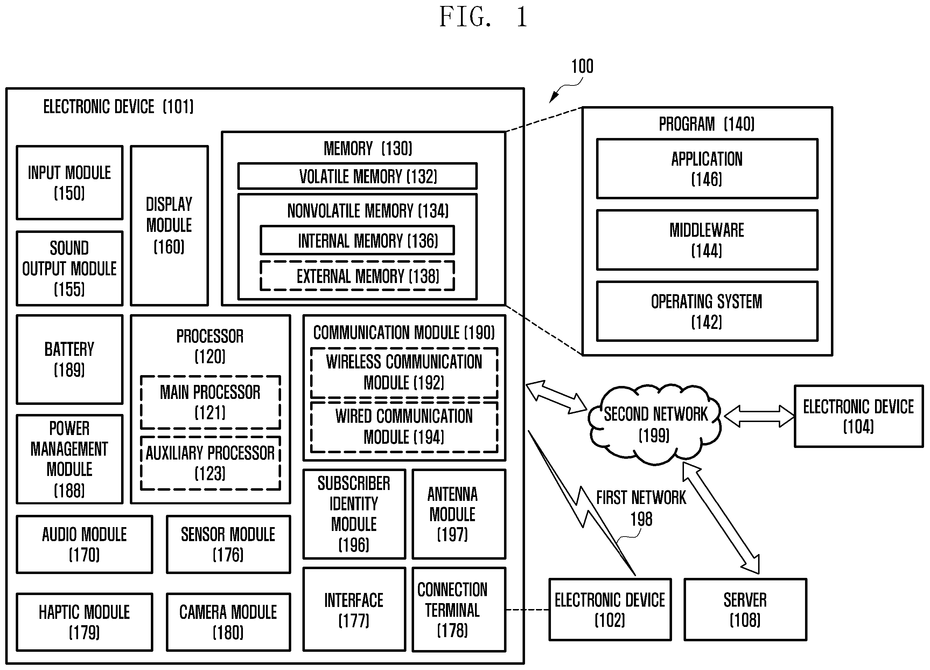

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

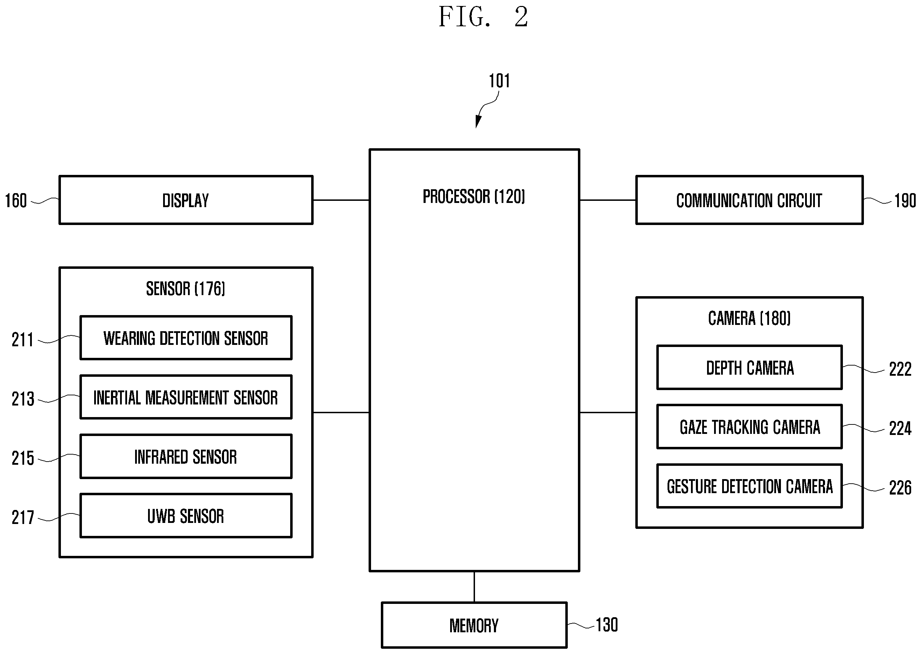

FIG. 2 is a block diagram schematically illustrating the configuration of a wearable electronic device according to an embodiment of the disclosure.

According to an embodiment, a wearable electronic device 101 disclosed below may include at least some embodiments described in FIG. 1. For example, the wearable electronic device 101 of FIG. 2 may include at least one of the components disclosed in FIG. 1. In the following description of the wearable electronic device 101, components that are substantially the same as those of the embodiments illustrated in FIG. 1 will be assigned the same reference numbers, and descriptions of functions thereof will be omitted to avoid redundancy.

According to various embodiments, the wearable electronic device 101 disclosed below may include at least one of augmented reality (AR) glasses (e.g., an AR device), virtual reality (VR) glasses (e.g., a VR device), video see-through (VST) mixed reality (MR) glasses, or a head mounted display (HMD).

Referring to FIG. 2, the wearable electronic device 101 (e.g., the electronic device 101 in FIG. 1) may include a display 160, a sensor 176, a camera 180, a communication circuit 190, a memory 130, and/or a processor 120.

According to various embodiments, the display 160 may include the display module 160 illustrated in FIG. 1. The sensor 176 may include the sensor module 176 illustrated in FIG. 1. The camera 180 may include the camera module 180 illustrated in FIG. 1. For example, at least one camera 180 may be included in the wearable electronic device 101. The communication circuit 190 may include the communication module 190 illustrated in FIG. 1.

According to an embodiment, the display 160 (e.g., the display module 160 in FIG. 1) may display a screen executed in the wearable electronic device 101. For example, the display 160 may display a screen associated with a virtual object (e.g., virtual content) in a virtual space. The display 160 may display a screen transferred through an external electronic device (e.g., the electronic devices 102 and 104 or the server 108 in FIG. 1). For example, the display 160 may display, in a virtual space, an execution screen of content or an application being executed on an external electronic device (e.g., the electronic devices 102 and 104 or the server 108 in FIG. 1) in an expanded and/or reduced format.

According to various embodiments, the display 160 may display an initial screen, a configuration screen, and/or a screen for executing various applications of the wearable electronic device 101. The display 160 may display a user interface (UI) capable of providing various services to a user of the electronic device 101. The display 160 may perform a display function and an input function.

According to various embodiments, the sensor 176 (e.g., the sensor module 176 in FIG. 1) may include a wearing detection sensor 211, an inertial measurement sensor 213, an infrared sensor 215, and/or a UWB sensor 217.

According to an embodiment, the wearing detection sensor 211 may detect whether the wearable electronic device 101 is being worn by the user on a part of the body (e.g., the face or the head).

According to an embodiment, an inertial measurement unit (IMU) 213 may measure at least one of the movement, posture, inclination, orientation, direction, moving speed, and gravitational acceleration of the wearable electronic device 101. The inertial measurement sensor 213 may include at least one of an acceleration sensor, a gyroscope sensor, an angular velocity sensor, and a geomagnetic sensor.

According to an embodiment, the infrared sensor 215 may detect movement and/or distance of an object near the wearable electronic device 101. For example, the infrared sensor 215 may include at least one of a proximity sensor, an illuminance sensor, an ultrasonic sensor, and a radar sensor.

According to an embodiment, the ultra-wideband (UWB) sensor 217 may detect, by using UWB radio waves, the positions of external electronic devices (e.g., the electronic devices 102 and 104 or the server 108 in FIG. 1) and/or peripheral devices within a specific range of the wearable electronic device 101.

According to various embodiments, the external electronic device (e.g., the electronic devices 102 and 104 or the server 108 in FIG. 1) may include a smart phone, a TV, a tablet, a computer, a laptop, a set top box, and/or a game console. For example, the peripheral devices may include a watch, a wireless earphone, a stylus pen, a remote controller, a game pad, a keyboard, a mouse, and/or a speaker. For example, the wearable electronic device 101 may be paired with an external electronic device (e.g., the electronic devices 102 and 104 or the server 108 in FIG. 1) and/or a peripheral device. For example, the wearable electronic device 101 may be paired with the external electronic device (e.g., the electronic devices 102 and 104 or the server 108 in FIG. 1) and/or the peripheral device through the communication circuit 190. For example, the wearable electronic device 101 may be functionally connected to an external electronic device (e.g., the electronic devices 102 and 104 or the server 108 in FIG. 1) and/or a peripheral device through wireless communication (e.g., Bluetooth).

According to various embodiments, the camera 180 (e.g., the camera module 180 in FIG. 1) may include a depth camera 222, an eye-tracking camera 224, and/or a gesture detection camera 226. For example, at least one camera 180 may be included in the wearable electronic device 101.

According to an embodiment, the depth camera 222 may acquire image information with regard to surrounding objects of the wearable electronic device 101. The depth camera 222 may acquire two-dimensional and/or three-dimensional images with regard to external objects of the wearable electronic device 101.

According to an embodiment, the eye-tracking camera 224 may identify a field of view (FOV) of a user of the wearable electronic device 101. The eye-tracking camera 224 may track the movement of the eye(s) (e.g., eyeball(s)) of the user of the wearable electronic device 101. For example, the eye-tracking camera 224 may acquire information related to a field of view and eye-tracking coordinates to which the eyes of a user of the wearable electronic device 101 are directed. The eye-tracking camera 224 may recognize an external electronic device (e.g., the electronic devices 102 and 104 or the server 108 in FIG. 1) and/or a peripheral device viewed through the wearable electronic device 101.

According to various embodiments, the eye-tracking camera 224 may track a user's eye gaze using at least one of the following methods, such as an electro-oculography or electrooculogram (EOG) sensor, a coil system, a dual Purkinje system, a bright pupil system, and a dark pupil system.

According to an embodiment, the gesture detection camera 226 may detect a movement of a part of a body of a user of the wearable electronic device 101. For example, the gesture detection camera 226 may detect information related to a gesture and/or gesture coordinates corresponding to a movement of a hand of the user of the wearable electronic device 101.

According to various embodiments, the communication circuit 190 (e.g., the communication module 190 in FIG. 1) may perform wired and/or wireless communication with the external electronic device (e.g., the electronic devices 102 and 104 or the server 108 in FIG. 1) and/or the peripheral device. For example, the wearable electronic device 101 may be paired with the external electronic device (e.g., the electronic devices 102 and 104 or the server 108 in FIG. 1) and/or the peripheral device by using the communication circuit 190. For example, the wearable electronic device 101 may be communicatively connected to the external electronic device (e.g., the electronic devices 102 and 104 or the server 108 in FIG. 1) and/or the peripheral device by using the communication circuit 190. For example, the wearable electronic device 101 may exchange at least one piece of information with the external electronic device (e.g., the electronic devices 102 and 104 or the server 108 in FIG. 1) and/or the peripheral device by using the communication circuit 190.

According to various embodiments, the external electronic device 310 (e.g., the electronic devices 102 and 104 or the server 108 in FIG. 1) or the peripheral device disclosed below may substantially include the same components as those of the electronic device 101 in FIG. 1.

According to an embodiment, the memory 130 may store executable instructions. For example, the memory 130 may store at least one instruction which, when executed by the processor 120, causes the electronic device 101 to perform at least one operation. For example, the at least one instruction may be stored in a computer-readable recording medium. The recording medium may be tangible and non-transitory. The memory 130 and/or the recording medium may store at least one program including at least one instruction.

According to various embodiments, the memory 130 may store an initial screen, a configuration screen, and/or various applications of the wearable electronic device 101 provided through the display 160. The memory 130 may store a user interface (UI) capable of providing various services to a user of the wearable electronic device 101. The memory 130 may perform a function of storing a program (e.g., the program 140 in FIG. 1), an operating system (e.g., the operating system 142 in FIG. 1), various applications, and input/output data for processing and control of the processor 120. The memory 130 may store a program for controlling the overall operation of the wearable electronic device 101. The memory 130 may store various configuration information necessary for functional processing in the wearable electronic device 101.

According to an embodiment, the processor 120 may be operatively connected to the display 160, the sensor 176, the camera 180, the communication circuit 190, and/or the memory 130. The processor 120 may be configured to access the memory 130 and execute at least one instruction. The wearable electronic device 101 may include at least one processor 120. The wearable electronic device 101 may include at least one memory 130.

According to various embodiments, the processor 120 may control the overall operation of the wearable electronic device 101 and the signal flow between the internal components, and perform functions of processing data. The processor 120 may include, for example, a central processing unit (CPU), an application processor, and/or a communication processor. The processor 120 may include a single core processor or a multi-core processor. The processor 120 may be configured by at least one processor. For example, the processor 120 may include an application processor (e.g., the main processor 121 in FIG. 1) and a sensor hub processor (e.g., the sub-processor 123 in FIG. 1).

According to various embodiments, an operation executed in the wearable electronic device 101 may be performed and/or executed by at least one instruction stored in the processor 120 and/or the memory 130. For example, in this document, an embodiment in which the wearable electronic device 101 is capable of performing a certain operation may be interpreted as meaning that the operation is performed by at least one instruction stored in the processor 120 and/or the memory 130.

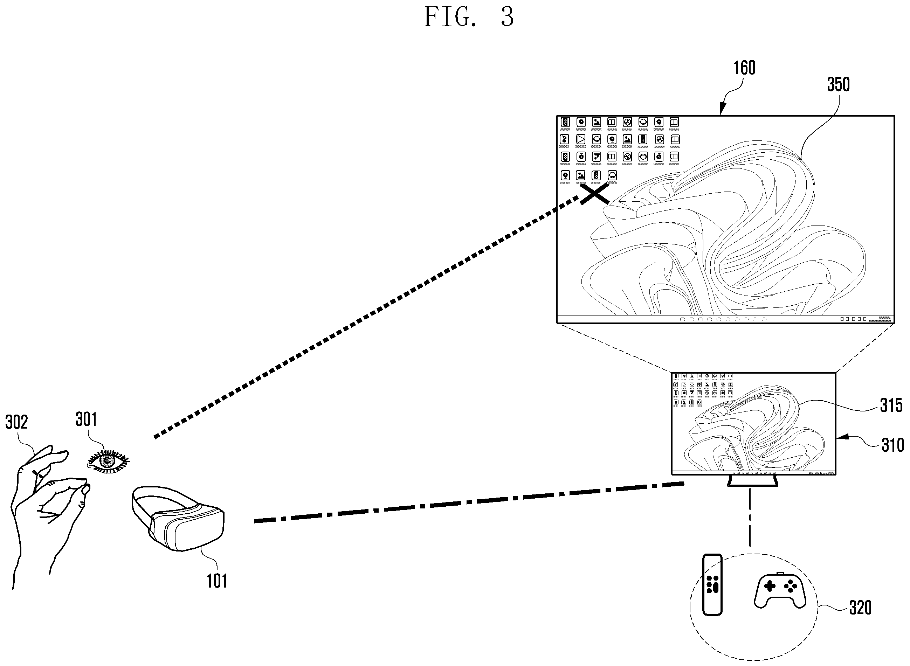

FIG. 3 schematically illustrates an embodiment in which a wearable electronic device exchanges content with an external electronic device through mirroring according to an embodiment of the disclosure.

Referring to FIG. 3, the wearable electronic device 101 may be paired with external electronic devices 310 (e.g., the electronic devices 102 and 104 or the server 108 in FIG. 1) within a predetermined area. For example, the wearable electronic device 101 may be communicatively connected to an external electronic device 310 within a Bluetooth communication range. For example, the external electronic device 310 may be paired with a peripheral device 320 (e.g., a remote controller or a game controller). For example, the external electronic device 310 or the peripheral device 320 may include at least one embodiment and components of the electronic device 101 illustrated in FIG. 1.

According to an embodiment, the wearable electronic device 101 may recognize an external electronic device 310 viewed by the user through the camera 180. For example, when the user looks at the external electronic device 310 within a field of view (FOV) through the camera 180, the wearable electronic device 101 may recognize the external electronic device 310. For example, the wearable electronic device 101 and the external electronic device 310 may exist within a communicable range (e.g., a Bluetooth communication range). For example, the wearable electronic device 101 and the external electronic device 310 may be paired through the communication circuit 190.

According to an embodiment, when the wearable electronic device 101 is recognized and a user gazes at a first execution screen 315 being reproduced on the external electronic device 310, the wearable electronic device 101 may transfer, to the external electronic device 310, information related to gaze coordinates from the user's eyes 301 and/or gesture coordinates from the user's hand 302.

According to an embodiment, the external electronic device 310 may transmit, through mirroring (e.g., a first transmission scheme), the first execution screen 315 being reproduced on the external electronic device 310, to the wearable electronic device 101, based on information related to gaze coordinates and/or gesture coordinates transferred from the wearable electronic device 101. For example, the wearable electronic device 101 may receive, through mirroring, a first execution screen 315 being reproduced on the external electronic device 310.

According to various embodiments, the first execution screen 315 may be classified as first content or second content according to a type of content reproduced on the external electronic device 310. For example, the type of content may be determined based on a total data amount of the content. For example, the wearable electronic device 101 or the external electronic device 310 may identify the type of content according to a data transmission rate. For example, the type of content may be determined based on whether a resolution of the display 160 of the wearable electronic device 101 is supported. For example, the first execution screen 315 transferred to the wearable electronic device 101 from the external electronic device 310 through mirroring (e.g., a first transmission method) may include the first content. For example, the first content may have a smaller total data amount than the second content, may have a lower data transmission rate, or may include a lower resolution (e.g., 4K).

According to an embodiment, the wearable electronic device 101 may display the extended screen 350 of the first execution screen 315 received from the external electronic device 310 in a virtual space through the display 160.

According to an embodiment, the wearable electronic device 101 may control the extended screen 350 of the first execution screen 315 transferred through the external electronic device 310 through a gaze of the user's eyes 301 and/or a gesture of the user's hand 302.

According to an embodiment, the external electronic device 310 may be controlled through a paired peripheral device 320 (e.g., a remote controller or a game controller).

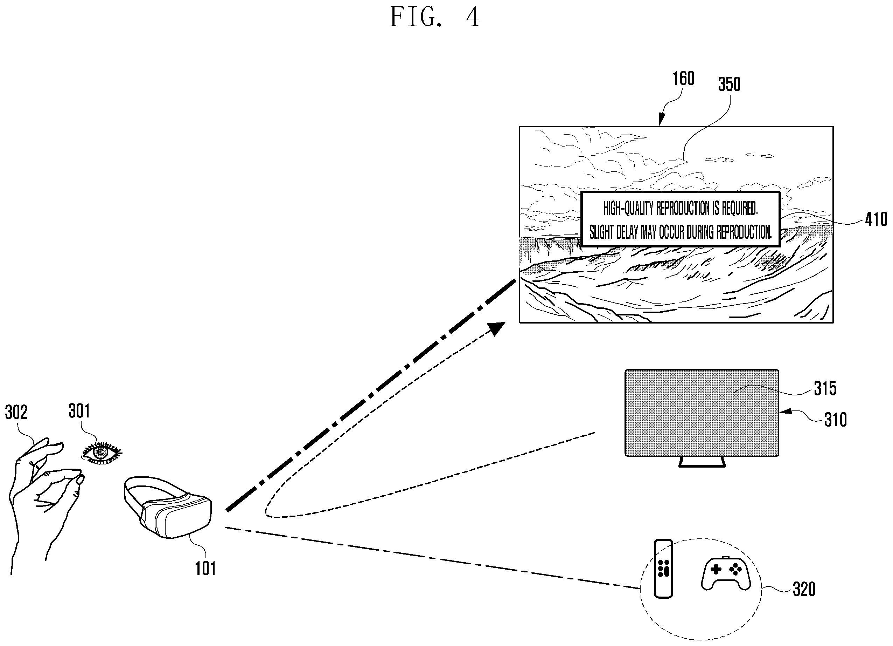

FIG. 4 schematically illustrates an embodiment in which a wearable electronic device exchanges content with an external electronic device through casting according to an embodiment of the disclosure.

Referring to FIG. 4, the wearable electronic device 101 may be paired with an external electronic device 310 (e.g., the electronic devices 102 and 104 or the server 108 in FIG. 1) within a predetermined area. For example, the wearable electronic device 101 may be communicatively connected to an external electronic device 310 within a Bluetooth communication range. For example, the external electronic device 310 may be paired with a peripheral device 320 (e.g., a remote controller or a game controller). For example, the external electronic device 310 or the peripheral device 320 may include at least one of the embodiments and components of the electronic device 101 illustrated in FIG. 1.

According to an embodiment, the wearable electronic device 101 may recognize an external electronic device 310 viewed by the user through the camera 180. For example, the wearable electronic device 101 may recognize an external electronic device 310, when the user looks at the external electronic device 310 within a field of view (FOV) through the camera 180. For example, the wearable electronic device 101 and the external electronic device 310 may exist within a communicable range (e.g., a Bluetooth communication range).

According to an embodiment, when the external electronic device 310 is recognized and a user gazes at a first execution screen 315 being reproduced by the external electronic device 310, the wearable electronic device 101 may transfer, to the external electronic device 310, information related to gaze coordinates from the user's eyes 301 and/or gesture coordinates from the user's hand 302.

According to an embodiment, the external electronic device 310 may transmit the first execution screen 315 being reproduced to the wearable electronic device 101 through casting (e.g., a second transmission method), based on information related to the gaze coordinates and/or the gesture coordinates transmitted from the wearable electronic device 101. For example, the wearable electronic device 101 may receive the first execution screen 315 being reproduced on an external electronic device 310 through casting.

According to various embodiments, the first execution screen 315 may be classified as first content or second content according to a type of content reproduced by the external electronic device 310. For example, the type of the content may be determined according to a total data amount of the content. For example, the wearable electronic device 101 or the external electronic device 310 may identify the type of content according to a data transmission rate. For example, the type of content may be determined based on whether a resolution of the display 160 of the wearable electronic device 101 is supported. For example, a first execution screen 315 transferred to the wearable electronic device 101 from the external electronic device 310 through casting (e.g., the second transmission method) may include second content. For example, the second content may have a larger total data amount than the first content, or may have a higher data transmission rate, or may include a higher resolution (e.g., 8K).

According to various embodiments, when the wearable electronic device 101 receives the first execution screen 315 including the second content through the external electronic device 310, the wearable electronic device 101 may, in real time, store a file related to the first execution screen 315 transferred through the external electronic device 310 in the memory 130.

According to an embodiment, the wearable electronic device 101 may display a file related to the first execution screen 315 including second content stored in the memory 130 through an extended screen 350. For example, the wearable electronic device 101 may display a warning pop-up 410 together with the extended screen 350 of the first execution screen 315 through the display 160. For example, the warning pop-up 410 may include a warning message such as "High-quality reproduction is required. A slight delay may occur during reproduction".

According to an embodiment, the wearable electronic device 101 may control the extended screen 350 of the first execution screen 315 transmitted through the external electronic device 310, through a gaze of the user's eyes 301 and/or a gesture of the user's hand 302.

According to an embodiment, the external electronic device 310 may release a pairing with the paired peripheral device 320 (e.g., a remote controller or a game controller).

According to an embodiment, the wearable electronic device 101 may be paired with the peripheral device 320, and may control the extended screen 350 of the first execution screen 315 according to the control of the peripheral device 320.

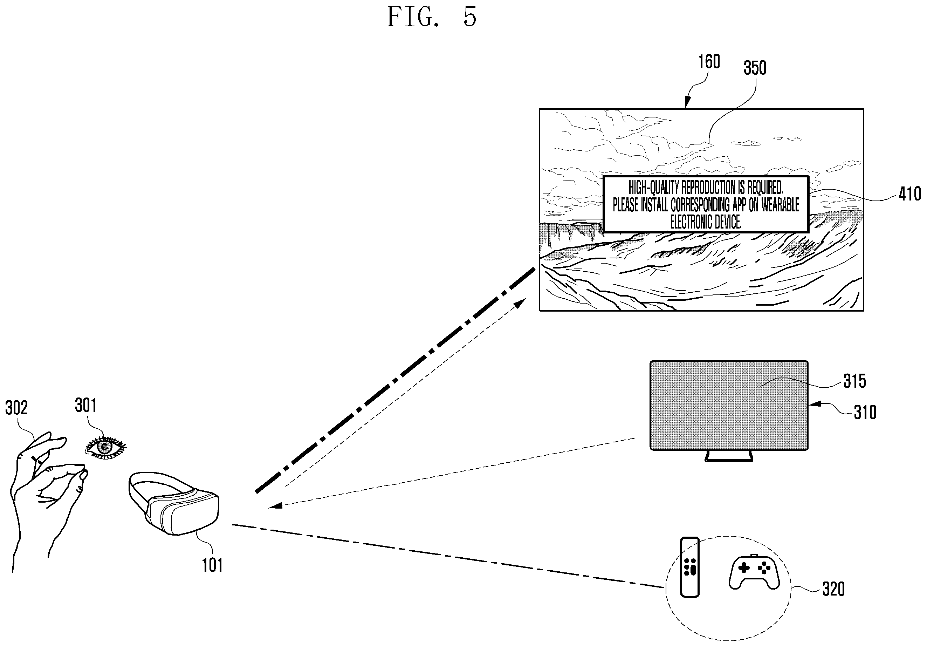

FIG. 5 schematically illustrates an embodiment in which a wearable electronic device exchanges content with an external electronic device through streaming according to an embodiment of the disclosure.

Referring to FIG. 5, the wearable electronic device 101 may be paired with an external electronic device 310 (e.g., the electronic devices 102 and 104 or the server 108 in FIG. 1) within a predetermined area. For example, the wearable electronic device 101 may be communicatively connected to an external electronic device 310 within a Bluetooth communication range. For example, the external electronic device 310 may be paired with a peripheral device 320 (e.g., a remote controller or a game controller). For example, the external electronic device 310 or the peripheral device 320 may include at least one embodiment and components of the electronic device 101 illustrated in FIG. 1.

According to an embodiment, the wearable electronic device 101 may recognize an external electronic device 310 viewed by the user through the camera 180. For example, when the user looks at the external electronic device 310 within a field of view (FOV) through the camera 180, the wearable electronic device 101 may recognize the external electronic device 310. For example, the wearable electronic device 101 and the external electronic device 310 may exist within a communicable range (e.g., a Bluetooth communication range).

According to an embodiment, when the external electronic device 310 is recognized and the user gazes at the first execution screen 315 executed in the external electronic device 310, the wearable electronic device 101 may transfer, to the external electronic device 310, information related to gaze coordinates from the user's eyes 301 and/or gesture coordinates from the user's hand 302.

According to an embodiment, the external electronic device 310 may transmit the first execution screen 315 being reproduced to the wearable electronic device 101 through streaming (e.g., the third transmission method), based on information related to the gaze coordinates and/or the gesture coordinates transferred from the wearable electronic device 101. For example, the wearable electronic device 101 may receive a first execution screen 315 being reproduced on the external electronic device 310 through streaming.

According to various embodiments, in order to execute and display the first execution screen 315, the wearable electronic device 101 may include an application that is substantially the same as an application installed on the external electronic device 310. For example, the wearable electronic device 101 and the external electronic device 310 may include substantially the same application capable of executing and displaying the first execution screen 315. For example, in a case where the wearable electronic device 101 and the external electronic device 310 include the same application capable of executing and displaying the first execution screen 315, the wearable electronic device 101 may receive URL information related to the first execution screen 315 from the external electronic device 310 through casting and/or streaming.

According to various embodiments, in a case where the wearable electronic device 101 does not include an application for executing and displaying a first execution screen 315 transferred through the external electronic device 310, the wearable electronic device 101 may display a warning pop-up 410 through the display 160. For example, the warning pop-up 410 may include a warning message such as "High-quality reproduction is required. Please install the corresponding app on the wearable electronic device".

According to various embodiments, the user of the wearable electronic device 101 may identify the warning pop-up 410, and install an application for executing the first execution screen 315 on the wearable electronic device 101.

According to an embodiment, the wearable electronic device 101 may display, as an extended screen 350 through the display 160, the information related to the first execution screen 315 transferred from the external electronic device 101.

According to an embodiment, the wearable electronic device 101 may control the extended screen 350 of the first execution screen 315 transmitted through the external electronic device 310 through a gaze of the user's eyes 301 and/or a gesture of the user's hand 302.

According to an embodiment, the external electronic device 310 may release a pairing with a paired peripheral device 320 (e.g., a remote controller or a game controller).

According to an embodiment, the wearable electronic device 101 may be paired with a peripheral device 320, and may control the extended screen 350 of the first execution screen 315 according to the control of the peripheral device 320.

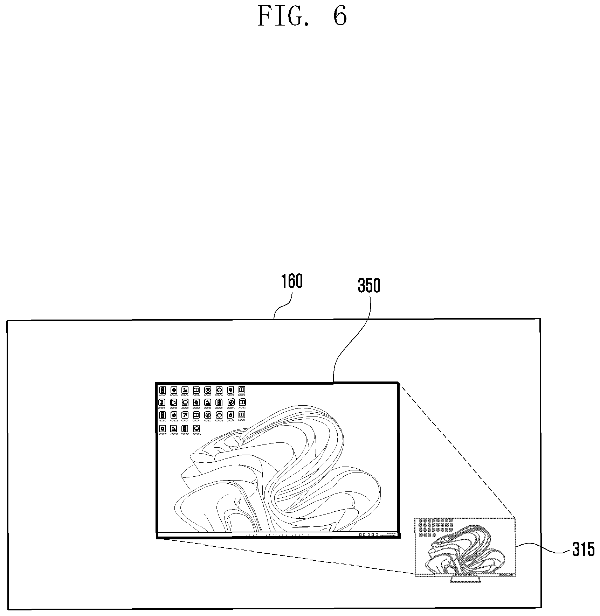

FIG. 6 schematically illustrates an embodiment in which a first execution screen is displayed when a second execution screen is not displayed on a display of a wearable electronic device according to an embodiment of the disclosure.

According to various embodiments, the embodiment of displaying a first execution screen 315, an extended screen 350, and/or a second execution screen 710, described below, may be applied to the embodiments described in FIGS. 3 to 5 above.

Referring to FIG. 6, in case that a user of the wearable electronic device 101 gazes at the first execution screen 315 of the external electronic device 310 through the camera 180, the wearable electronic device 101 may display, on the display 160, the extended screen 350 of the first execution screen 315 transferred from the external electronic device 310.

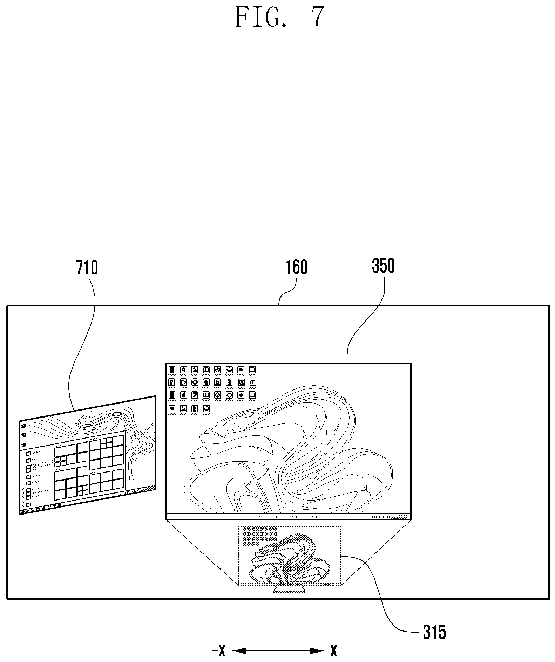

According to an embodiment, when no other screen (e.g., a second execution screen 710 in FIG. 7) is displayed on the display 160 of the wearable electronic device 101, the wearable electronic device 101 may display the extended screen 350 corresponding to the first execution screen 315 transferred from the external electronic device 310 in a virtual space of the display 160.

FIG. 7 schematically illustrates an embodiment in which a first execution screen is moved and deformed for display in a case where a second execution screen is displayed on a display of a wearable electronic device according to an embodiment of the disclosure.

Referring to FIG. 7, while a second execution screen 710 is displayed on the display 160 of the wearable electronic device 101, when a user gazes at a first execution screen 315 of the external electronic device 310 through the camera 180, the wearable electronic device 101 may display an extended screen 350 of the first execution screen 315 transferred from the external electronic device 310 on the display 160. For example, a display position of the extended screen 350 may be determined based on the center of the display 160 and depending on whether the first execution screen 315 is located at a particular position. According to various embodiments, the display position of the extended screen 350 may be determined based on the center of the display 160 and depending on whether the second execution screen 710 is located at a particular position.

According to an embodiment, while a second execution screen 710 of the wearable electronic device 101 is displayed at the center of the display 160, when a user gazes at the first execution screen 315 of the external electronic device 310 through the camera 180, the wearable electronic device 101 may move the second execution screen 710 to a first direction (e.g., x-axis direction) or a second direction (e.g., -x-axis direction), and may display, at the center of the display 160, an extended screen 350 of the first execution screen 315 transferred from the external electronic device 310.

According to an embodiment, while a second execution screen 710 is displayed adjacent to the center of the display 160 of the wearable electronic device 101, when the extended screen 350 of the first execution screen 315 transferred from the external electronic device 310 is displayed on the display 160, the second execution screen 710 may be moved from a first direction (e.g., x-axis direction) to a second direction (e.g., -x-axis direction), and the extended screen 350 of the first execution screen 315 may be positioned in the first direction.

According to an embodiment, while a second execution screen 710 is displayed adjacent to the center of the display 160 of the wearable electronic device 101, when the extended screen 350 of the first execution screen 315 transferred from the external electronic device 310 is displayed on the display 160, the second execution screen 710 may be moved from a second direction (e.g., -x-axis direction) to a first direction (e.g., x-axis direction), and the extended screen 350 of the first execution screen 315 may be positioned in the second direction.

According to an embodiment, the second execution screen 710 moved from a first direction (e.g., x-axis direction) to a second direction (e.g., -x-axis direction) may be deformed so as to be distinguished from the extended screen 350 of the first execution screen 315. For example, the second execution screen 710 may be changed into an inclined form (e.g., a tilted form) so as to be distinguished from the extended screen 350 of the first execution screen 315, or may be displayed transparently.

According to an embodiment, the second execution screen 710 moved from the second direction (e.g., the -x-axis direction) to the first direction (e.g., the x-axis direction) may be deformed so as to be distinguished from the extended screen 350 of the first execution screen 315. For example, the second execution screen 710 may be changed into an inclined form (e.g., a tilted form) so as to be distinguished from the extended screen 350 of the first execution screen 315 or may be displayed transparently.

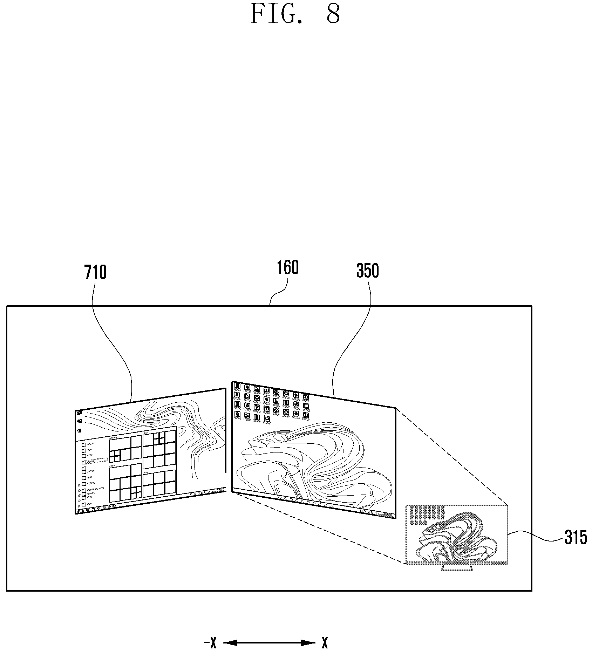

FIG. 8 schematically illustrates an embodiment in which a first execution screen and a second execution screen are deformed and displayed when the first execution screen and the second execution screen are displayed on a display of a wearable electronic device according to an embodiment of the disclosure.

Referring to FIG. 8, while a second execution screen 710 is displayed on the display 160 of the wearable electronic device 101, when a user gazes at the first execution screen 315 of the external electronic device 310 through the camera 180, the wearable electronic device 101 may display an extended screen 350 of the first execution screen 315 transferred from the external electronic device 310 on the display 160. For example, a display position of the extended screen 350 may be determined based on a center of the display 160 and depending on whether the first execution screen 315 is located at a particular position. According to various embodiments, the display position of the extended screen 350 may be determined based on the center of the display 160 and depending on whether the second execution screen 710 is located at a particular position.

According to an embodiment, while a second execution screen 710 is displayed on the display 160 of the wearable electronic device 101, when the extended screen 350 of the first execution screen 315 transferred from the external electronic device 310 is displayed on the display 160, the wearable electronic device 101 may arrange the extended screen 350 of the first execution screen 615 and the second execution screen 710 such that they do not overlap each other through the display 160.

According to an embodiment, while a second execution screen 710 is displayed on the display 160 of the wearable electronic device 101, when the extended screen 350 of the first execution screen 315 transferred from the external electronic device 310 is displayed on the display 160, the wearable electronic device 101 may arrange the extended screen 350 of the first execution screen 315 and the second execution screen 710 in a second direction (e.g., -x-axis direction) and a first direction (e.g., x-axis direction), with reference to the center of the display 160.

According to an embodiment, while a second execution screen 710 is displayed on the display 160 of the wearable electronic device 101, when the extended screen 350 of the first execution screen 315 transferred from the external electronic device 310 is displayed on the display 160, the wearable electronic device 101 may deform the extended screen 350 of the first execution screen 315 and the second execution screen 710. For example, the extended screen 350 of the first execution screen 615 and the second execution screen 710 may be deformed into an inclined form (e.g., a tilted form) so as to be distinguished from each other. For example, in order to distinguish the extended screen 350 of the first execution screen 615 and the second execution screen 710 from each other, one of the extended screen 350 of the first execution screen 615 and the second execution screen 710 may be transparently displayed.

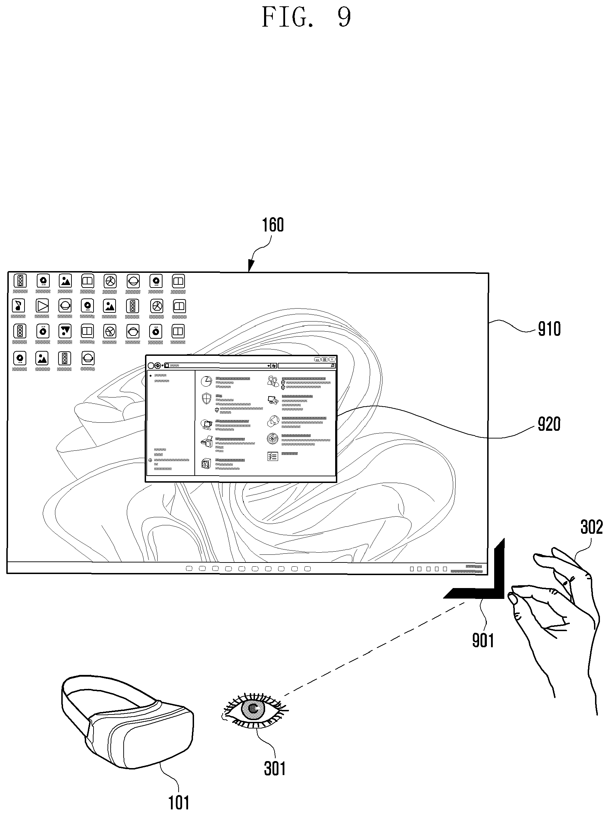

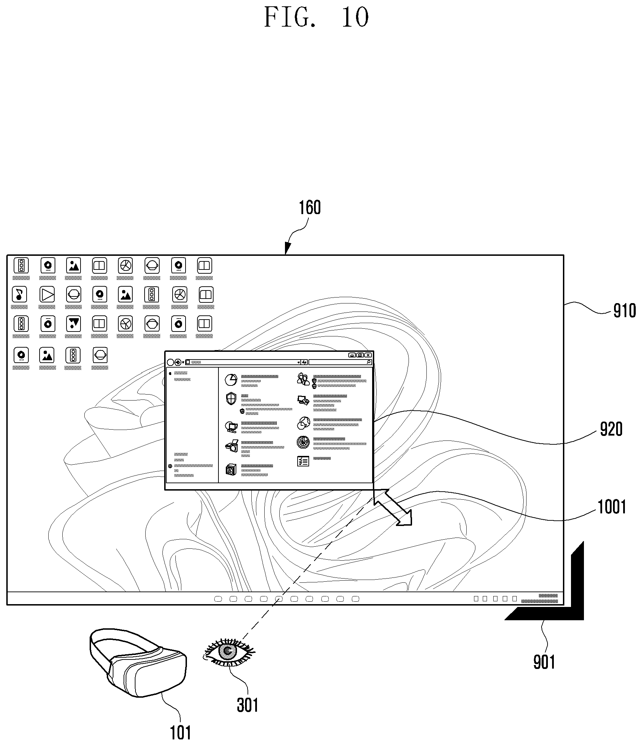

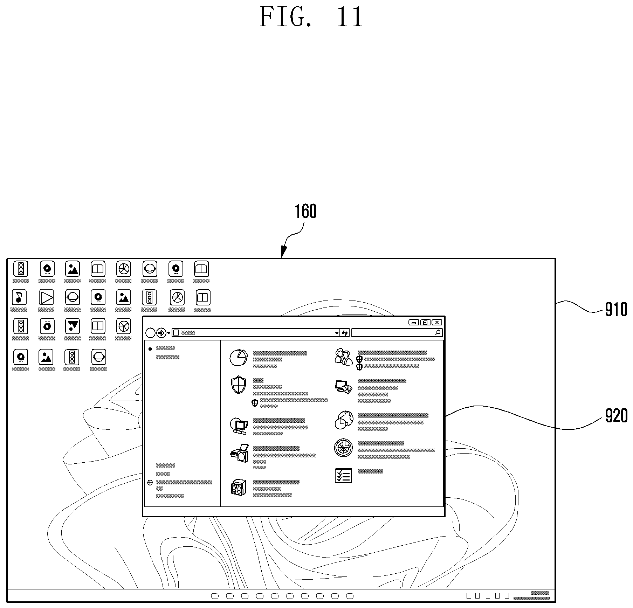

FIG. 9 schematically illustrates a first size adjustment icon formed in a first window in an extended screen of a first execution screen displayed on a display of a wearable electronic device according to an embodiment of the disclosure. FIG. 10 schematically illustrates a second size adjustment icon formed in a second window in an extended screen of a first execution screen displayed on a display of a wearable electronic device according to an embodiment of the disclosure. FIG. 11 schematically illustrates an embodiment in which sizes of a first window and a second window are adjusted in an extended screen of a first execution screen displayed on a display of a wearable electronic device according to an embodiment of the disclosure.

Referring to FIG. 9, the wearable electronic device 101 may display, through the display 160, an extended screen of a first execution screen received from the external electronic device 310. For example, the extended screen of the first execution screen may include the first window 910 and/or the second window 920. For example, the first window 910 may include a larger execution screen than the second window 920. For example, the second window 920 may include a smaller screen than the first window 910. For example, the second window 920 may be displayed within the first window 910.

According to an embodiment, when gaze coordinates from the user's eyes 301 are recognized at a corner of the first window 910, the wearable electronic device 101 may display a first size adjustment icon 901 on the display 160. In a case where the first size adjustment icon 901 is displayed at the corner of the first window 910, a user of the wearable electronic device 101 may adjust a size of the first window 910 by controlling the first size adjustment icon 901 through a gesture using the user's hand 302.

Referring to FIG. 10, when gaze coordinates from the user's eyes 301 are recognized at a corner of the second window 920, the wearable electronic device 101 may display a second size adjustment icon 1001 on the display 160. When the second size adjustment icon 1001 is displayed at the corner of the second window 920, the wearable electronic device 101 may adjust the size of the second window 920 by controlling the second size adjustment icon 1001 through a gesture using the user's hand 302.

Referring to FIG. 11, the user of the wearable electronic device 101 may expand the size of the first window 910 through the first size adjustment icon 901 illustrated in FIG. 9. For example, the wearable electronic device 101 may reduce the size of the first window 910 through the first size adjustment icon 901 illustrated in FIG. 9.

According to an embodiment, the wearable electronic device 101 may expand the size of the second window 920 through the second size adjustment icon 1001 illustrated in FIG. 10. For example, the wearable electronic device 101 may reduce the size of the second window 920 through the second size adjustment icon 1001 illustrated in FIG. 10.

According to various embodiments, the first size adjustment icon 901 and the second size adjustment icon 1001 may include different shapes. According to various embodiments, the first size adjustment icon 901 and the second size adjustment icon 1001 are not limited to the shapes illustrated in FIG. 9 and FIG. 10, and may include various other shapes.

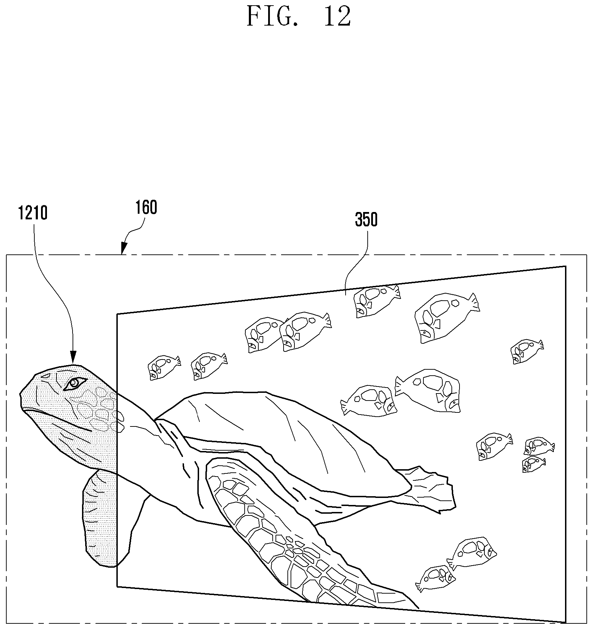

FIG. 12 schematically illustrates an embodiment in which the recognition range of gaze coordinates may be expanded in a case where a first execution screen displayed on a display of a wearable electronic device includes three-dimensional content according to an embodiment of the disclosure.

Referring to FIG. 12, the wearable electronic device 101 may display, through the display 160, an extended screen 350 of a first execution screen received from the external electronic device 310.

According to an embodiment, the extended screen 350 of the first execution screen received from the external electronic device 310 may include three-dimensional (3D) content 1210. For example, the 3D content 1210 may include a 3D image.

According to an embodiment, when the extended screen 350 of the first execution screen includes 3D content 1210, the wearable electronic device 101 may expand a recognition range of gaze coordinates from a user's eyes 301 so as to correspond to the 3D content 1210. For example, when the 3D content 1210 is displayed to protrude from the display 160, the wearable electronic device 101 may enable the user to recognize or identify the protruding 3D content 1210 through the user's eyes 301.

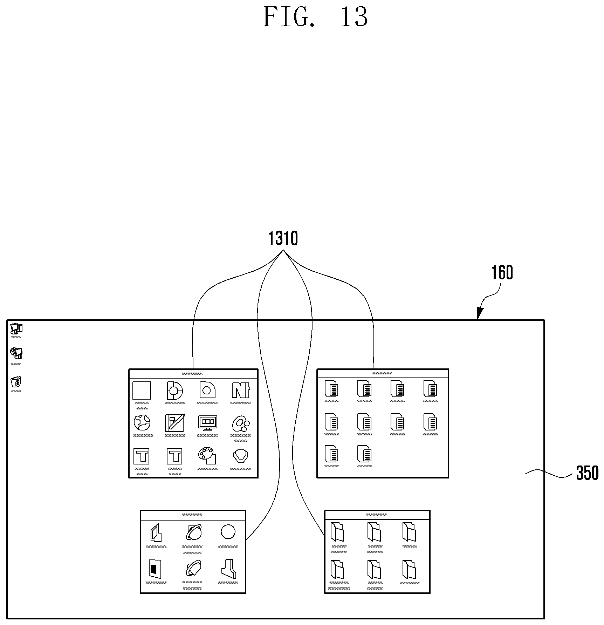

FIG. 13 schematically illustrates an embodiment in which at least one application is displayed on a first execution screen displayed on a display of a wearable electronic device according to an embodiment of the disclosure.

Referring to FIG. 13, the wearable electronic device 101 may display, through the display 160, an extended screen 350 of a first execution screen received from an external electronic device 310.

According to an embodiment, the wearable electronic device 101 may display at least one application 1310 available in the wearable electronic device 101 on an extended screen 350 of the first execution screen displayed on the display 160.

According to an embodiment, the at least one application 1310 may include an application that can be used exclusively in the wearable electronic device 101. For example, the at least one application 1310 may include files and/or content created in the wearable electronic device 101.

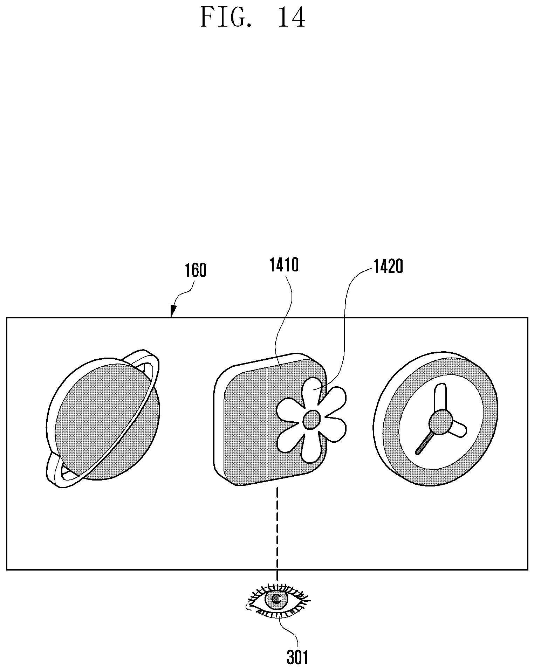

FIG. 14 schematically illustrates an embodiment in which an application displayed on a display of a wearable electronic device is popped up when gaze coordinates corresponding to the application are recognized, according to an embodiment of the disclosure.

Referring to FIG. 14, the wearable electronic device 101 may display, through the display 160, a specific application 1410, for example, among at least one application 1310 illustrated in FIG. 13.

According to an embodiment, a user of the wearable electronic device 101 may gaze at a specific application 1410 for a designated time through the user's eyes 301.

According to an embodiment, when the wearable electronic device 101 recognizes, through the user's eyes 301, gaze coordinates corresponding to a specific application 1410, the wearable electronic device 101 may pop up the specific application 1410 for which the gaze coordinates are recognized.

According to an embodiment, a user of the wearable electronic device 101 may execute the popped-up specific application 1410 through a gesture using the user's hand 302.

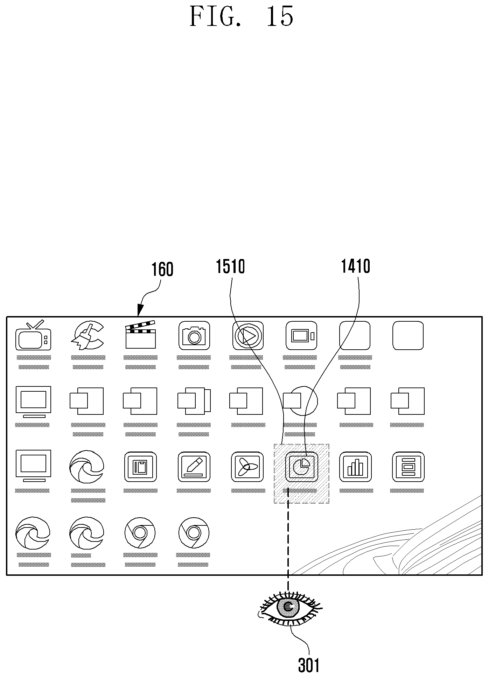

FIG. 15 schematically illustrates an embodiment in which an application displayed on a display of a wearable electronic device is highlighted when gaze coordinates corresponding to the application are recognized, according to an embodiment of the disclosure.

Referring to FIG. 15, the wearable electronic device 101 may display, for example, at least one application 1310 illustrated in FIG. 13 through the display 160, and identify whether a specific application 1410 is gazed at for a designated time through a user's eyes 301.

According to an embodiment, when the wearable electronic device 101 recognizes gaze coordinates corresponding to a specific application 1410 through the user's eyes 301, the wearable electronic device 101 may display, as a highlight 1510, the specific application 1410 for which the gaze coordinates are recognized.

According to an embodiment, a user of the wearable electronic device 101 may execute the specific application 1410 displayed as the highlight 1510 through a gesture using the user's hand 302.

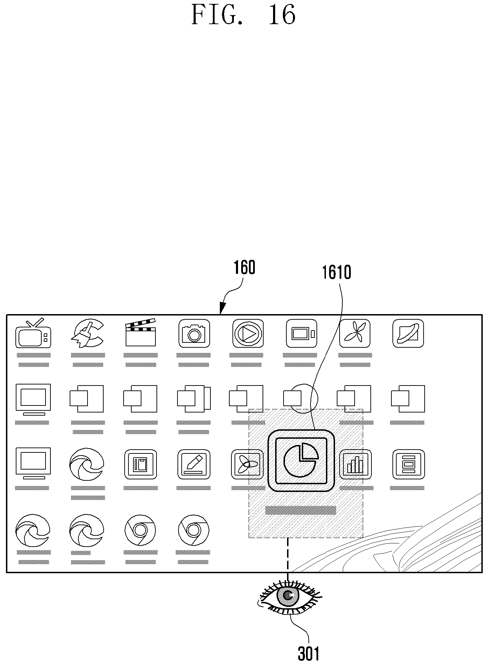

FIG. 16 schematically illustrates an embodiment in which an application displayed on a display of a wearable electronic device is displayed in an enlarged form when gaze coordinates corresponding to the application are recognized, according to an embodiment of the disclosure.

Referring to FIG. 16, the wearable electronic device 101 may display, for example, at least one application 1310 disclosed in FIG. 13 through a display 160, and may identify whether a specific application (e.g., the specific application 1410 in FIG. 15) is gazed at for a designated time through the user's eyes 301.

According to an embodiment, when the wearable electronic device 101 recognizes gaze coordinates corresponding to the specific application 1410 through the user's eyes 301, the wearable electronic device 101 may enlarge and display the specific application for which the gaze coordinates are recognized.

According to an embodiment, the user of the wearable electronic device 101 may execute the enlarged specific application 1610 through a gesture using the user's hand 302.

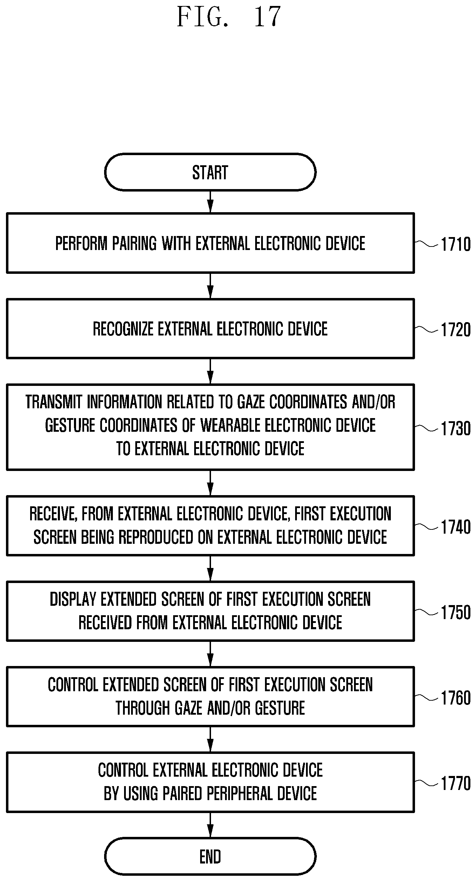

FIG. 17 is a flowchart schematically illustrating a method for controlling a wearable electronic device according to an embodiment of the disclosure.

The method described below may include, for example, the embodiments described in FIG. 1 to FIG. 16. The method described below may be applied to the embodiments illustrated in FIG. 1 to FIG. 16, for example. For example, the methods described below are not limited to the following operations, and may perform operations related to at least some of the embodiments illustrated in FIG. 3 to FIG. 16. In the embodiments related to the method described below, each operation may be performed in sequence, but may not necessarily be performed in sequence. For example, the order of the operations may be changed. For example, the order of the operations may be performed in parallel. For example, all of the operations may not be performed, and at least some of the operations may be performed. The operations described below may be performed by the processor 120 of the electronic device 101 and/or instructions stored in the memory 130.

In operation 1710, the wearable electronic device 101 may be paired with an external electronic device 310 (e.g., the electronic devices 102 and 104 or the server 108 in FIG. 1) through a communication circuit 190 (e.g., the communication module 190 in FIG. 1).

According to an embodiment, the wearable electronic device 101 may be communicatively connected to an external electronic device 310 (e.g., the electronic devices 102 and 104 or the server 108 in FIG. 1) within a predetermined area by using a communication circuit 190 (e.g., the communication module 190 in FIG. 1).

According to an embodiment, the wearable electronic device 101 may be communicatively connected to an external electronic device 310 within a Bluetooth communication range.

According to an embodiment, the external electronic device 310 may be paired with a peripheral device 320 (e.g., a remote controller or a game controller).

In operation 1720, the wearable electronic device 101 may recognize an external electronic device 310 viewed by a user through at least one camera 180.

According to an embodiment, the wearable electronic device 101 may recognize the external electronic device 310 when the user looks at the external electronic device 310 within a field of view (FOV) through at least one camera 180.

In operation 1730, when the user gazes at the first execution screen 315 being reproduced on the external electronic device 310, the wearable electronic device 101 may transfer information related to gaze coordinates from the user's eyes 301 and/or gesture coordinates from the user's hand 302 to the external electronic device 310.

In operation 1740, the wearable electronic device 101 may receive, through mirroring, a first execution screen 315 being reproduced on the external electronic device 310.

In operation 1750, the wearable electronic device 101 may display the extended screen 350 of the first execution screen 315 received from the external electronic device 310 in a virtual space through the display 160.

In operation 1760, the wearable electronic device 101 may control the extended screen 350 of the first execution screen 315 transferred through the external electronic device 310 through a gaze of the user's eyes 301 and/or a gesture of the user's hand 302.

In operation 1770, the external electronic device 310 may be controlled through the paired peripheral device 320 (e.g., a remote controller or a game controller).

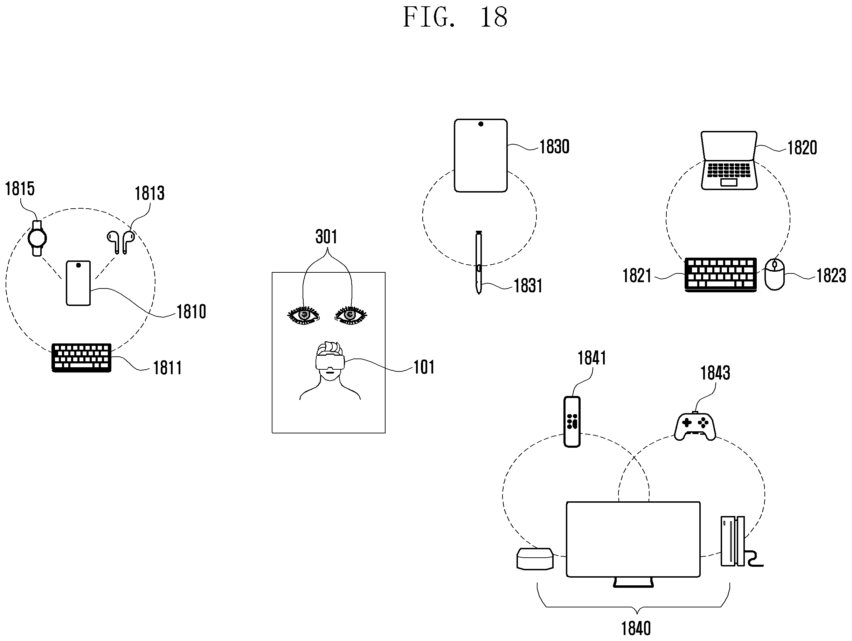

FIG. 18 schematically illustrates a login process of a wearable electronic device and at least one external electronic device and a peripheral device according to an embodiment of the disclosure.

According to various embodiments, the embodiments described below may include at least one of the embodiments disclosed in FIG. 1 to FIG. 17.

Referring to FIG. 18, when a user wears the wearable electronic device 101, the wearable electronic device 101 may recognize an iris of the user's eyes 301 through at least one camera 180 and may log in to a user account. For example, the wearable electronic device 101 may be pre-registered by the user through the user's iris.

According to an embodiment, a first external electronic device 1810 (e.g., a mobile phone), a second external electronic device 1820 (e.g., a notebook), a third external electronic device 1830 (e.g., a tablet), and/or a fourth external electronic device 1840 (e.g., a TV, a set-top box, or a game console) may exist around the wearable electronic device 101. For example, the wearable electronic device 101, the first external electronic device 1810, the second external electronic device 1820, the third external electronic device 1830, and/or the fourth external electronic device 1840 may exist within a range in which communicative pairing through Bluetooth communication is possible. For example, the wearable electronic device 101, the first external electronic device 1810, the second external electronic device 1820, the third external electronic device 1830, and/or the fourth external electronic device 1840 may include a device having a history of being logged in with a user account.

According to an embodiment, the first external electronic device 1810 (e.g., a mobile phone) may be paired with a (1-1)th peripheral device 1811 (e.g., a keyboard), a (1-2)th peripheral device 1813 (e.g., a wireless earphone), and/or a (1-3)th peripheral device 1815 (e.g., a watch). For example, the second external electronic device 1820 (e.g., a laptop) may be paired with a (2-1)th peripheral device 1821 (e.g., a keyboard) and/or a (2-2)th peripheral device 1823 (e.g., a mouse). For example, the third external electronic device 1830 (e.g., a tablet) may be paired with a (3-1)th peripheral device 1831 (e.g., a stylus pen). For example, the fourth external electronic device 1840 (e.g., a TV, set-top box, or game console) may be paired with a (4-1)th peripheral device 1841 (e.g., a remote controller) and/or a (4-2)th peripheral device 1843 (e.g., a game pad).

According to various embodiments, the first external electronic device 1810, the second external electronic device 1820, the third external electronic device 1830, and/or the fourth external electronic device 1840 may include at least one embodiment and components of the electronic device 101 illustrated in FIG. 1.

According to various embodiments, the (1-1)th peripheral device 1811 (e.g., a keyboard), the (1-2)th peripheral device 1813 (e.g., a wireless earphone), the (1-3)th peripheral device 1815 (e.g., a watch), the (2-1)th peripheral device 1821 (e.g., a keyboard), the (2-2)th peripheral device 1823 (e.g., a mouse), the (3-1)th peripheral device 1831 (e.g., a stylus pen), the (4-1)th peripheral device 1841 (e.g., a remote controller), and/or the (4-2)th peripheral device 1843 (e.g., a game pad) may include at least one of the embodiments and components of the electronic device 101 illustrated in FIG. 1.

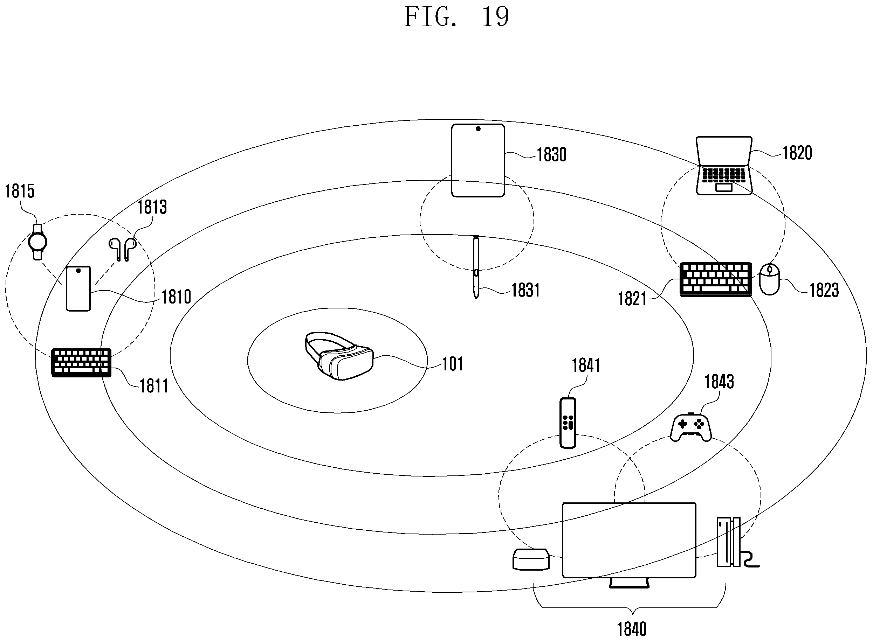

FIG. 19 schematically illustrates an embodiment in which at least one external electronic device in a vicinity of a wearable electronic device is identified according to an embodiment.

Referring to FIG. 19, the wearable electronic device 101 may identify whether a first external electronic device 1810, a second external electronic device 1820, a third external electronic device 1830, and/or a fourth external electronic device 1840, each having a history of being logged in with a user account, are present within a predetermined area. For example, the wearable electronic device 101 may identify whether a first external electronic device 1810, a second external electronic device 1820, a third external electronic device 1830, and/or a fourth external electronic device 1840, each having a history of being logged in with a user account, are within a range in which Bluetooth communication is possible.

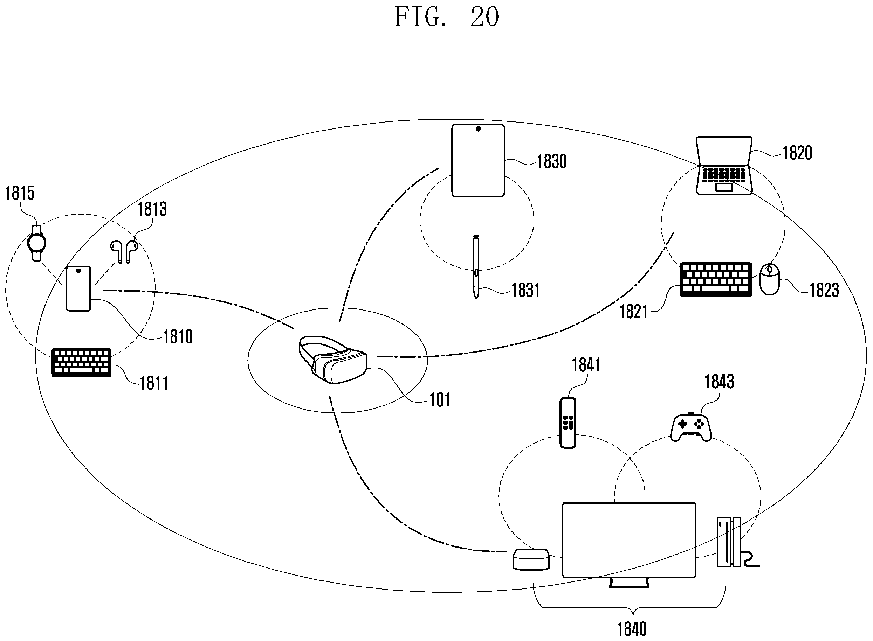

FIG. 20 schematically illustrates an embodiment in which a wearable electronic device and at least one external electronic device are paired according to an embodiment of the disclosure.

Referring to FIG. 20, when a first external electronic device 1810, a second external electronic device 1820, a third external electronic device 1830, and/or a fourth external electronic device 1840, each having a history of being logged in with a user account are identified within a predetermined area of the wearable electronic device 101, the wearable electronic device 101 may be paired with the first external electronic device 1810, the second external electronic device 1820, the third external electronic device 1830, and/or the fourth external electronic device 1840.

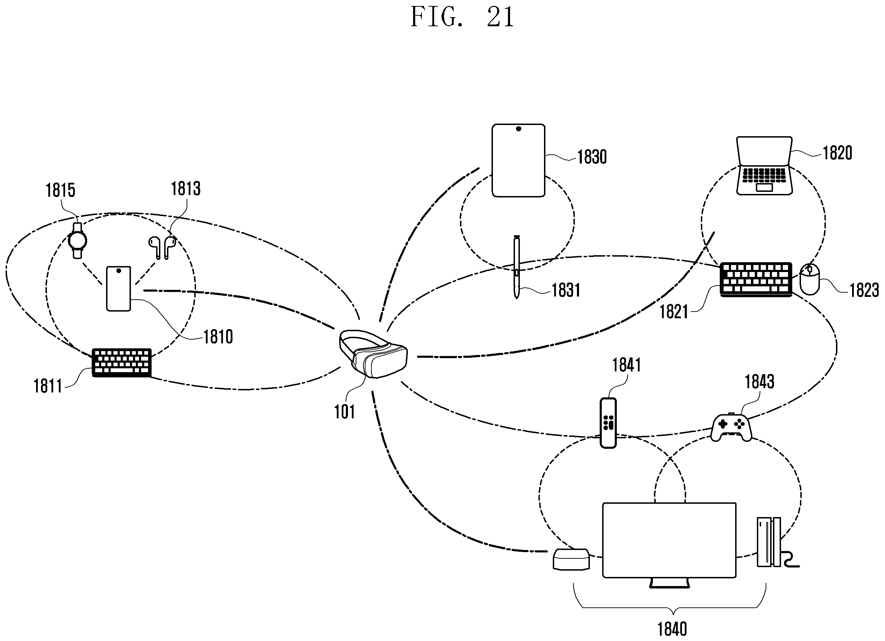

FIG. 21 schematically illustrates an embodiment in which a wearable electronic device and at least one peripheral device are paired according to an embodiment of the disclosure.

According to an embodiment, the first external electronic device 1810 may be paired with a (1-1)th peripheral device 1811 (e.g., a keyboard), a (1-2)th peripheral device 1813 (e.g., a wireless earphone), and/or a (1-3)th peripheral device 1815 (e.g., a watch). For example, the second external electronic device 1820 may be paired with a (2-1)th peripheral device 1821 (e.g., a keyboard) and/or a (2-2)th peripheral device 1823 (e.g., a mouse). For example, the third external electronic device 1830 may be paired with a (3-1)th peripheral device 1831 (e.g., a stylus pen). For example, the fourth external electronic device 1840 may be paired with a (4-1)th peripheral device 1841 (e.g., a remote controller) and/or a (4-2)th peripheral device 1843 (e.g., a game pad).

According to an embodiment, the wearable electronic device 101 may establish pairing with multiple peripheral devices, including a (1-1)th peripheral device 1811 (e.g., a keyboard), a (1-2)th peripheral device 1813 (e.g., a wireless earphone), and/or a (1-3)th peripheral device 1815 (e.g., a watch), which are paired with the first external electronic device 1810.

According to an embodiment, the wearable electronic device 101 may establish pairing with multiple peripheral devices, including a (2-1)th peripheral device 1821 (e.g., a keyboard) and/or a (2-2)th peripheral device 1823 (e.g., a mouse), which are paired with the second external electronic device 1820.

According to an embodiment, the wearable electronic device 101 may establish pairing with multiple peripheral devices, including a (3-1)th peripheral device 1831 (e.g., a stylus pen), which is paired with the third external electronic device 1830.

According to an embodiment, the wearable electronic device 101 may establish pairing with multiple peripheral devices, including a (4-1)th peripheral device 1841 (e.g., a remote controller) and/or a (4-2)th peripheral device 1843 (e.g., a game pad), which are paired with the fourth external electronic device 1840.

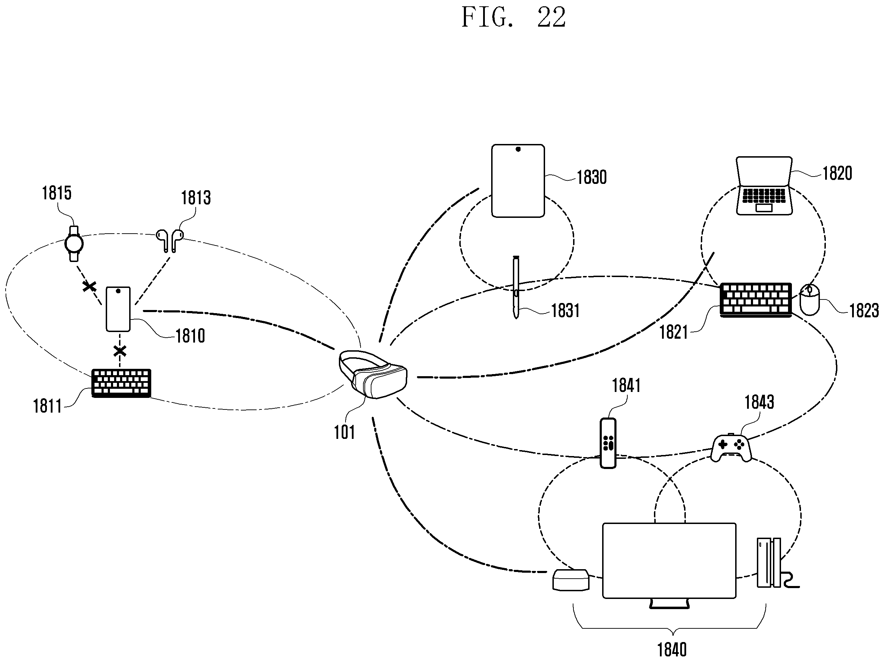

FIG. 22 schematically illustrates an embodiment in which multipoint pairing between a wearable electronic device and at least one peripheral device is established according to an embodiment of the disclosure.

According to an embodiment, the wearable electronic device 101 may identify a type of connection profile of a (1-1)th peripheral device 1811 (e.g., a keyboard), a (1-2)th peripheral device 1813 (e.g., a wireless earphone), a (1-3)th peripheral device 1815 (e.g., a watch), a (2-1)th peripheral device 1821 (e.g., a keyboard), a (2-2)th peripheral device 1823 (e.g., a mouse), a (3-1)th peripheral device 1831 (e.g., a stylus pen), a (4-1)th peripheral device 1841 (e.g., a remote controller), and/or a (4-2)th peripheral device 1843 (e.g., a game pad).

According to an embodiment, it may be determined whether a peripheral device has been used immediately before a user wears the wearable electronic device 101. For example, when a (1-1)th peripheral device 1811 (e.g., a keyboard) and a (1-3)th peripheral device 1815 (e.g., a watch), which had been paired with the first external electronic device 1810, were used immediately before the user wears the wearable electronic device 101, the (1-1)th peripheral device 1811 and the (1-3)th peripheral device 1815 may be unpaired from the first external electronic device 1810, and multipoint pairing between the wearable electronic device 101 and the (1-1)th peripheral device 1811 and the (1-3)th peripheral device 1815 may be established.

According to various embodiments, a connection profile used by at least one peripheral device may include a hands-free profile (HFP), a stereo audio profile (A2DP), a human interface device profile (HID), an AV remote control profile (AVRCP), a video distribution profile (VDP), a health device profile (HDP), a basic printing profile (BPP), and/or a file transfer profile (FTP).

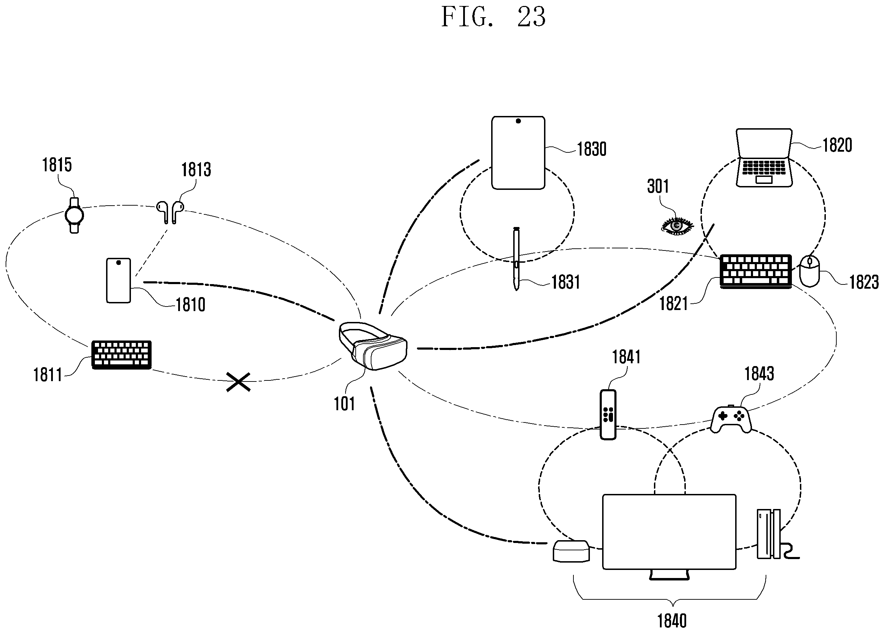

FIG. 23 schematically illustrates an embodiment in which a wearable electronic device and at least one peripheral device are paired and the pairing therebetween is released according to an embodiment of the disclosure.

According to an embodiment, in a state in which the wearable electronic device 101 is paired with the first external electronic device 1810 and the (1-1)th peripheral device 1811 (e.g., a keyboard), a user of the wearable electronic device 101 may gaze at the second external electronic device 1820 (e.g., a laptop). For example, the wearable electronic device 101 may recognize the second external electronic device 1820 gazed at by the user through the user's eyes 301.

According to an embodiment, the wearable electronic device 101 may identify the connection profile of the (1-1)th peripheral device 1811 (e.g., a keyboard) and the connection profile of the (2-1)th peripheral device 1821 (e.g., a keyboard) paired with the second external electronic device 1820 (e.g., a notebook). For example, the (1-1)th peripheral device 1811 (e.g., a keyboard) may use a human interface device profile (HID). For example, the (2-1)th peripheral device 1821 (e.g., a keyboard) may use the same human interface device profile (HID) as the (1-1)th peripheral device 1811 (e.g., a keyboard).

According to an embodiment, when a profile (e.g., a human interface device profile (HID)) of the (1-1)th peripheral device 1811 (e.g., a keyboard) and a profile (e.g., a human interface device profile (HID)) of the (2-1)th peripheral device 1821 (e.g., a keyboard) are the same, pairing between the wearable electronic device 101 and the (1-1)th peripheral device 1811 (e.g., a keyboard) may be released, and pairing between the wearable electronic device 101 and the (2-1)th peripheral device 1821 (e.g., a keyboard) may be maintained.

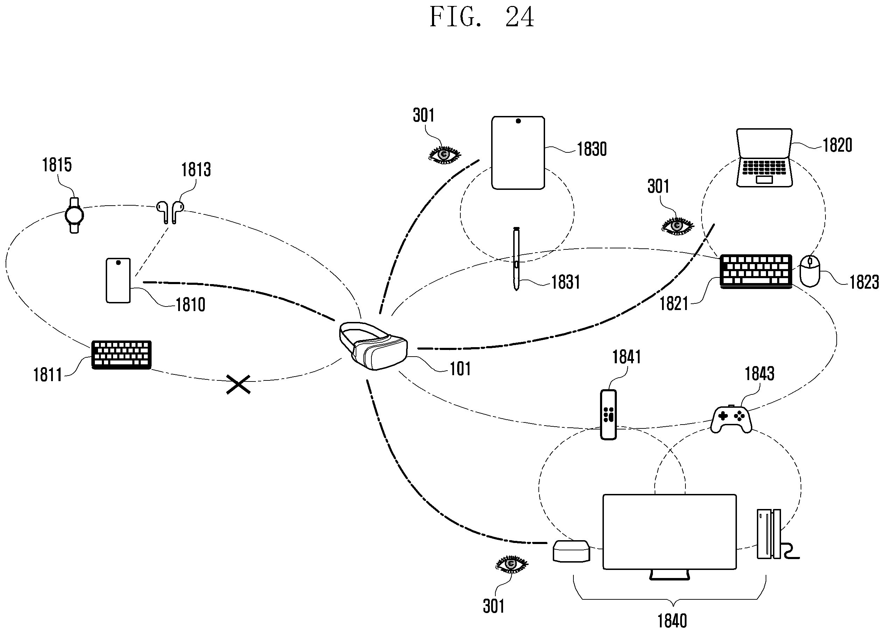

FIG. 24 schematically illustrates an embodiment in which a wearable electronic device, at least one external electronic device, and at least one peripheral device are paired and the pairing is released according to an embodiment of the disclosure.

According to an embodiment, in a state in which the wearable electronic device 101 has been paired with the first external electronic device 1810, a user of the wearable electronic device 101 may gaze at the second external electronic device 1820, the third external electronic device 1830, or the fourth external electronic device 1840. For example, the wearable electronic device 101 may recognize the second external electronic device 1820, the third external electronic device 1830, or the fourth external electronic device 1840 gazed at by the user through the user's eyes 301.

According to an embodiment, when a user of the wearable electronic device 101 gazes at the second external electronic device 1820, the (2-1)th peripheral device 1821 and the (2-2)th peripheral device 1823 may maintain a connection with the second external electronic device 1820 or may be paired with the wearable electronic device 101.

According to an embodiment, when a user of the wearable electronic device 101 gazes at the third external electronic device 1830, the (3-1)th peripheral device 1831 may maintain a connection with the third external electronic device 1830 or may be paired with the wearable electronic device 101.

According to an embodiment, when a user of the wearable electronic device 101 gazes at the fourth external electronic device 1840, the (4-1)th peripheral device 1841 and the (4-2)th peripheral device 1843 may maintain a connection to the fourth external electronic device 1840 or may be paired with the wearable electronic device 101.

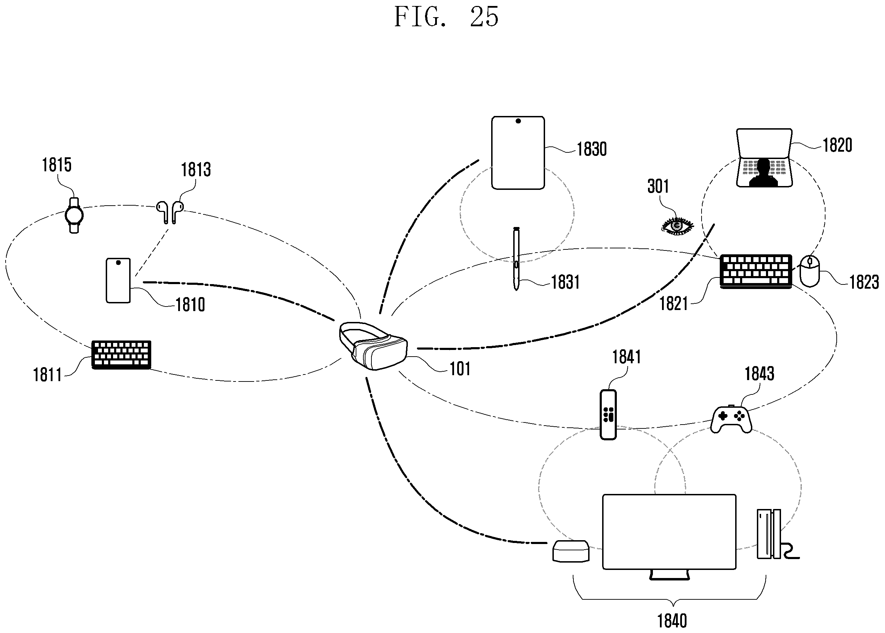

FIG. 25 schematically illustrates an embodiment related to pairing of a wearable electronic device when at least one external electronic device and at least one peripheral device are in use according to an embodiment of the disclosure.

According to an embodiment, the user of the wearable electronic device 101 may gaze at the second external electronic device 1820. For example, the wearable electronic device 101 may recognize the second external electronic device 1820 gazed by the user through the user's eyes 301.

According to an embodiment, when a user of the wearable electronic device 101 stares at the second external electronic device 1820, the second external electronic device 1820 may be in use by using the (2-1)th peripheral device 1821 and the (2-2)th peripheral device 1823.

According to an embodiment, when the second external electronic device 1820 is used through the (2-1)th peripheral device 1821 and the (2-2)th peripheral device 1823, the (2-1)th peripheral device 1821 and the (2-2)th peripheral device 1823 may not be paired with the wearable electronic device 101, and pairing with the second external electronic device 1820 may be maintained.

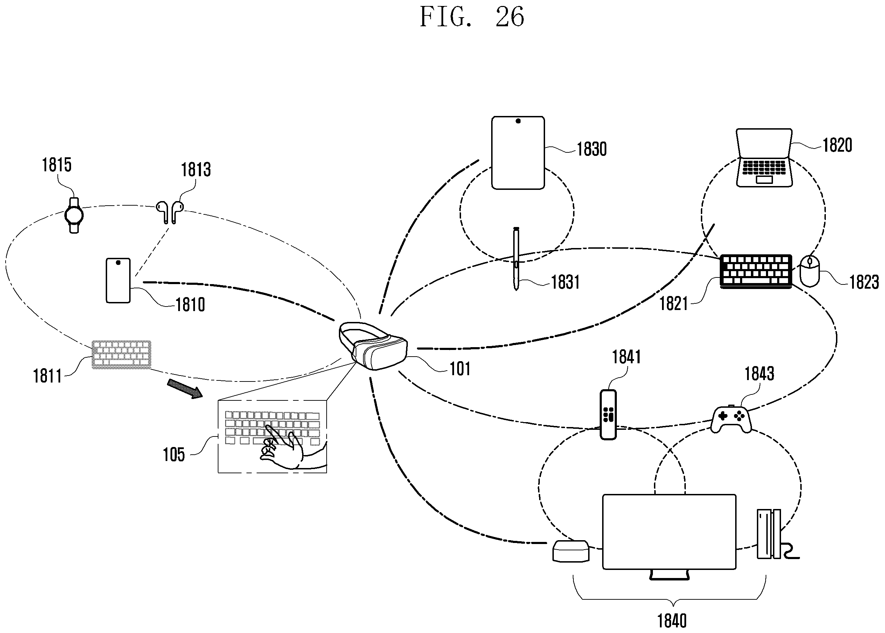

FIG. 26 schematically illustrates an embodiment in which a wearable electronic device displays a virtual character input device according to an embodiment of the disclosure.

According to an embodiment, a user of the wearable electronic device 101 may gaze at the first external electronic device 1810. For example, the wearable electronic device 101 may recognize the first external electronic device 1810 gazed at by the user through the user's eyes 301.

According to an embodiment, the wearable electronic device 101 may be paired with the first external electronic device 1810.

According to an embodiment, in case that there is no (1-1)th peripheral device 1811 (e.g., a keyboard) that is paired with the first external electronic device 1810, the wearable electronic device 101 may display a virtual character inputter 105 (e.g., virtual keyboard) on the display 160.

According to an embodiment, when there is no (1-1)th peripheral device 1811 (e.g., a keyboard) paired with the first external electronic device 1810, the wearable electronic device 101 may activate a virtual character inputter 105 (e.g., virtual keyboard) in a virtual space through the display 160.

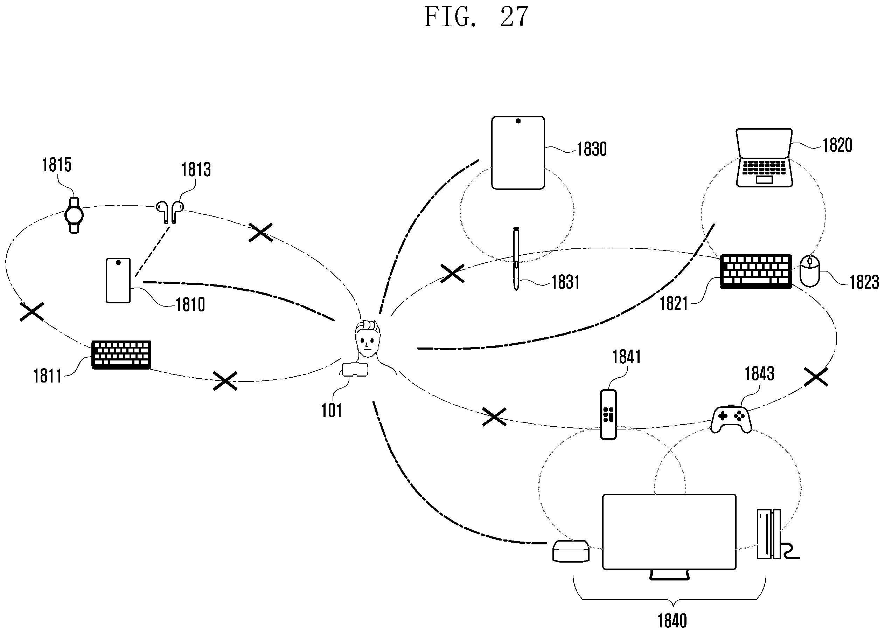

FIG. 27 schematically illustrates an embodiment related to releasing pairing among a wearable electronic device, at least one external electronic device, and at least one peripheral device according to an embodiment of the disclosure.

According to an embodiment, a user may detach the wearable electronic device 101. For example, the user may not use the wearable electronic device 101.

According to an embodiment, in a case where a user does not use the wearable electronic device 101, the wearable electronic device 101 may be unpaired from the first external electronic device 1810, the second external electronic device 1820, the third external electronic device 1830, and the fourth external electronic device 1840.

According to an embodiment, when a user does not use the wearable electronic device 101, the wearable electronic device 101 may be unpaired from the (1-1)th peripheral device 1811, the (1-2)th peripheral device 1813, the (1-3)th peripheral device 1815, the (2-1)th peripheral device 1821, the (2-2)th peripheral device 1823, the (3-1)th peripheral device 1831, the (4-1)th peripheral device 1841, and the (4-2)th peripheral device 1843.

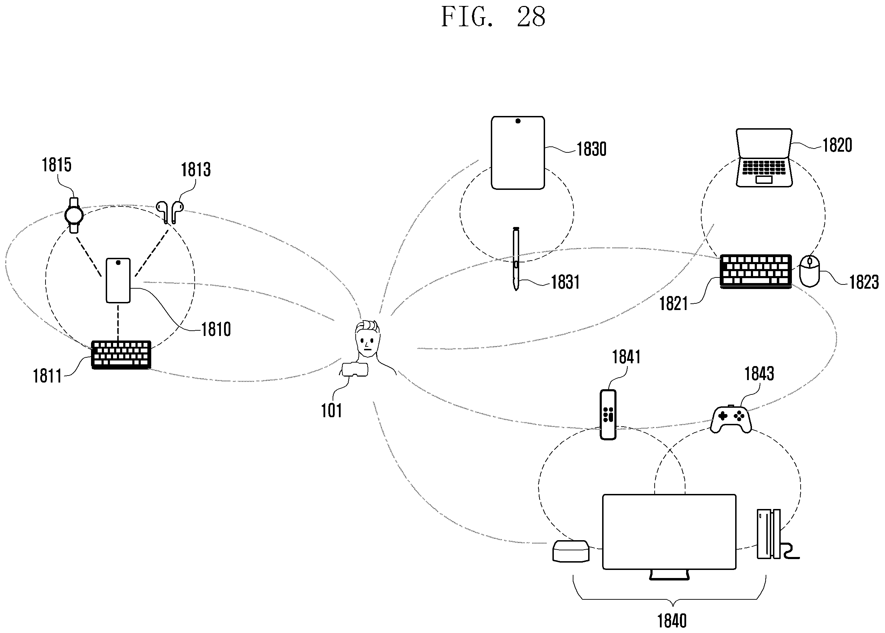

FIG. 28 schematically illustrates an embodiment in which at least one external electronic device and at least one peripheral device are re-paired according to an embodiment of the disclosure.

According to an embodiment, a user may detach the wearable electronic device 101. For example, the user may not use the wearable electronic device 101.

According to an embodiment, when the user does not use the wearable electronic device 101, at least one of the (1-1)th peripheral device 1811, the (1-2)th peripheral device 1813, and the (1-3)th peripheral device 1815 may be re-paired with the first external electronic device 1810 that has been paired before the wearable electronic device 101 is worn.

According to an embodiment, when the user does not use the wearable electronic device 101, at least one of the (2-1)th peripheral device 1821 and the (2-2)th peripheral device 1823 may be re-paired with the second external electronic device 1820 that has been paired before the wearable electronic device 101 is worn.

According to an embodiment, when the user does not use the wearable electronic device 101, the (3-1)th peripheral device 1831 may be re-paired with the third external electronic device 1830 that has been paired before the wearable electronic device 101 is worn.

According to an embodiment, when a user does not use the wearable electronic device 101, at least one of the (4-1)th peripheral device 1841 and the (4-2)th peripheral device 1843 may be re-paired with the fourth external electronic device 1840 that has been paired before the wearable electronic device 101 is worn.

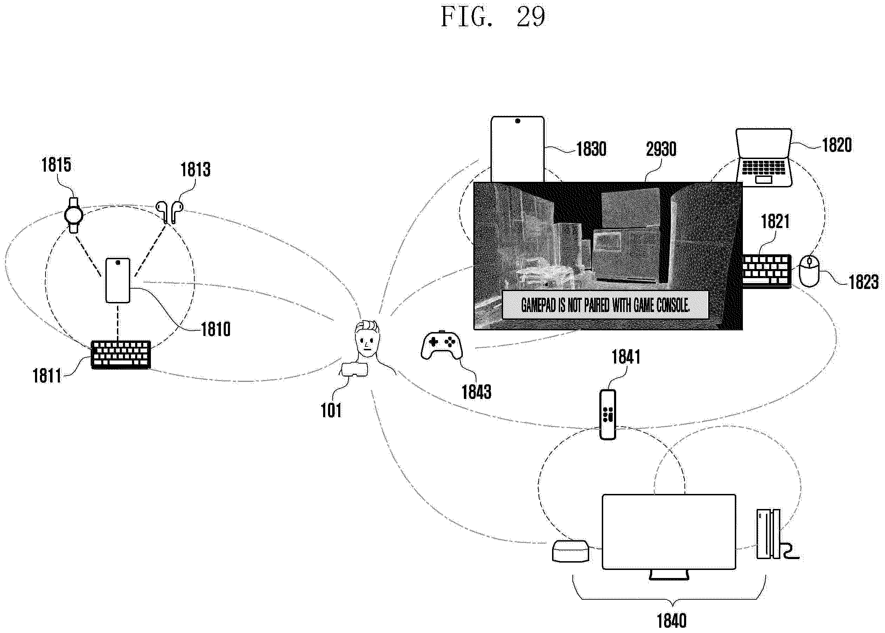

FIG. 29 schematically illustrates an embodiment in which at least one peripheral device cannot re-pair with at least one external electronic device according to an embodiment of the disclosure.

According to an embodiment, when the (4-2)th peripheral device 1843 (e.g., a game pad) is not located within a predetermined area with the fourth external electronic device 1840, the (4-2)th peripheral device 1843 (e.g., a game pad) may not be re-paired with the fourth external electronic device 1840.

According to an embodiment, when the (4-2)th peripheral device 1843 (e.g., a game pad) is not located within a predetermined area relative to the fourth external electronic device 1840, the fourth external electronic device 1840 may provide a notification screen 2030 displaying a position of the (4-2)th peripheral device 1843 (e.g., a game pad) immediately after the user detaches the wearable electronic device 101.

A wearable electronic device 101 according to an embodiment of the disclosure may include a display 160, at least one camera 180, a communication circuit 190, at least one processor 120, and a memory 130 configured to store instructions. According to an embodiment, the instructions, when executed by the at least one processor 120, may cause the wearable electronic device 101 to perform pairing with the external electronic device 310 through the communication circuit 120, recognize the external electronic device 320 viewed through the at least one camera 180, transfer information related to gaze coordinates and/or gesture coordinates of a user of the wearable electronic device 101 to the external electronic device 310, receive, through mirroring, a first execution screen 315 being reproduced on the external electronic device 310 from the external electronic device 310, based on the information related to the gaze coordinates and/or the gesture coordinates, and display, through the display 160, an extended screen 350 of the first execution screen 315 received from the external electronic device 310. According to an embodiment, the extended screen 350 of the first execution screen 315 may be configured to be controllable through a gaze and/or a gesture of the user of the wearable electronic device 101. According to an embodiment, the external electronic device 310 may be configured to be controllable through a paired peripheral device 320.

According to an embodiment, the instructions, when executed by the at least one processor 120, may cause the wearable electronic device 101 to display, on the display 160, the extended screen 350 of the first execution screen 315 in case that the second execution screen 710 is not displayed on the display 160.

According to an embodiment, the instructions, when executed by the at least one processor 120, may cause the wearable electronic device 101 to, in case that the extended screen 350 of the first execution screen 315 is displayed on the display 160 while a second execution screen 710 is displayed on the display 160, move the second execution screen 710 from a first direction to a second direction, and position the extended screen 350 of the first execution screen 315 in the first direction.

According to an embodiment, the instructions, when executed by the at least one processor 120, may cause the wearable electronic device 101 to deform the second execution screen 720 moved from the first direction to the second direction so as to be distinguished from the extended screen 350 of the first execution screen 315.

According to an embodiment, the instructions, when executed by the at least one processor 120, may cause the wearable electronic device 101 to, in case that the extended screen 350 of the first execution screen 315 is displayed on the display 160 while a second execution screen 710 is displayed on the display 160, arrange the extended screen 350 of the first execution screen 315 and the second execution screen 710 such that the extended screen 350 of the first execution screen 315 and the second execution screen 710 do not overlap each other, and deform the extended screen 350 of the first execution screen 315 and the second execution screen 710.

According to an embodiment, the instructions, when executed by the at least one processor 120, may cause the wearable electronic device 101 to, in case that the gaze coordinates are recognized at a corner of a first window 910 in the extended screen 350 of the first execution screen 315 displayed on the display 160, display a first size adjustment icon 901 for adjusting a size of the first window 910 through the gesture, and in case that the gaze coordinates are recognized at a corner of a second window 920 in the extended screen 350 of the first execution screen 315, display a second size adjustment icon 1001 for adjusting a size of the second window 920 through the gesture.

According to an embodiment, the instructions, when executed by the at least one processor 120, may cause the wearable electronic device 101 to, in case that the extended screen 350 of the first execution screen 315 displayed on the display 160 includes three-dimensional content 1210, expand a recognition range of the gaze coordinates so as to correspond to the three-dimensional content 1210.

According to an embodiment, the instructions, when executed by the at least one processor 120, cause the wearable electronic device 101 to display at least one application 1310 available in the wearable electronic device 101 on the extended screen 350 of the first execution screen 315 displayed on the display 160.

According to an embodiment, the instructions, when executed by the at least one processor 120, may cause the wearable electronic device 101 to pop up, highlight, or enlarge the at least one application 1310 in case that the gaze coordinates corresponding to the at least one application are recognized for a designated time.

According to an embodiment, the instructions, when executed by the at least one processor 120, may cause the wearable electronic device 101 to identify a type of content of the first execution screen 315 being reproduced on the external electronic device 310, receive the first content through mirroring from the external electronic device 310 in case that the first execution screen 315 includes first content, receive the second content through casting from the external electronic device 310 in case that the first execution screen 315 includes second content, release pairing between the external electronic device 310 and the peripheral device 320, and perform pairing between the wearable electronic device 101 and the peripheral device 320.

A method for controlling a wearable electronic device 101 according to an embodiment of the disclosure may include performing, by the wearable electronic device 101, pairing with an external electronic device 310 through a communication circuit 190. According to an embodiment, the method may include recognizing an external electronic device 320 by the wearable electronic device 101. According to an embodiment, the method may include transferring information related to the gaze coordinates and/or the gesture coordinates of a user of the wearable electronic device 101 to the external electronic device 310. According to an embodiment, the method may include receiving, through mirroring from the external electronic device 310, a first execution screen 315 being reproduced by the external electronic device 310, based on the information related to the gaze coordinates and/or the gesture coordinate. According to an embodiment, the method may include displaying, on a display 160, an extended screen 350 of the first execution screen 315 received from the external electronic device 310. According to an embodiment, the method may include controlling the extended screen 350 of the first execution screen 315 through a gaze and/or a gesture of the user of the wearable electronic device 101. According to an embodiment, the method may include controlling the external electronic device 310 through a peripheral device 320 paired with the external electronic device 310.

According to an embodiment, the method may further include, in case that a second execution screen 710 is not displayed on the display 160, displaying the extended screen 350 of the first execution screen 315 on the display 160.

According to an embodiment, the method may further include, in case that the extended screen 350 of the first execution screen 315 is displayed on the display 160 while a second execution screen 710 is displayed on the display 160, moving the second execution screen 710 from a first direction to a second direction, and positioning the extended screen 350 of the first execution screen 315 in the first direction.

According to an embodiment, the method may further include deforming the second execution screen 720 moved from the first direction to the second direction, so as to be distinguished from the extended screen 350 of the first execution screen 315.

According to an embodiment, the method may further include, in case that the extended screen 350 of the first execution screen 315 is displayed on the display 160 while a second execution screen 710 is displayed on the display 160, arranging the extended screen 350 of the first execution screen 315 and the second execution screen 710 such that the extended screen 350 of the first execution screen 315 and the second execution screen 710 do not overlap each other, and deforming the extended screen 350 of the first execution screen 315 and the second execution screen 710.

According to an embodiment, the method may further include, in case that the gaze coordinates are recognized at a corner of the first window 910 in the extended screen 350 of the first execution screen 315 displayed on the display 160, displaying a first size adjustment icon 901 for adjusting a size of the first window 910 through the gesture, and, in case that the gaze coordinates are recognized at a corner of the second window 920 in the extended screen 350 of the first execution screen 315, displaying a second size adjustment icon 1001 for adjusting a size of the second window 920 through the gesture.

According to an embodiment, the method may further include, in case that the extended screen 350 of the first execution screen 315 displayed on the display 160 includes three-dimensional content 1210, expanding a recognition range of the gaze coordinates so to correspond to the three-dimensional content 1210.

According to an embodiment, the method may further include displaying at least one application 1310 available in the wearable electronic device 101 on the extended screen 350 of the first execution screen 315 displayed on the display 160.

According to an embodiment, the method may further include popping up, highlighting, or enlarging the at least one application 1310 in case that the gaze coordinates corresponding to the at least one application are recognized for a designated time.

According to an embodiment, the method may further include identifying a type of content of a first execution screen 315 being reproduced on the external electronic device 310, receiving, through mirroring, first content from the external electronic device 310 in case that the first execution screen 315 includes the first content, receiving, through casting, second content from the external electronic device 310 in case that the first execution screen 315 includes the second content, releasing pairing between the external electronic device 310 and the peripheral device 320, and performing pairing between the wearable electronic device 101 and the peripheral device 320.

Although the disclosure has been described with reference to various embodiments of the disclosure, it will be apparent to those skilled in the art that various changes and modifications may be made without departing from the technical features of the disclosure, and such changes and modifications also fall within the scope of the disclosure.

## Claims

1. A wearable electronic device (101) comprising:
a display (160);
at least one camera (180);
a communication circuit (190);
at least one processor (120); and
memory (130) storing instructions,
wherein the instructions, when executed by the at least one processor (120), cause the wearable electronic device (101) to:
perform pairing with an external electronic device (310) through the communication circuit (190);
recognize the external electronic device (320) viewed through the at least one camera (180);
transfer, to the external electronic device (310), information related to gaze coordinates and/or gesture coordinates of a user of the wearable electronic device (101);
based on the information related to the gaze coordinates and/or the gesture coordinate, receive, through mirroring, a first execution screen (315) being reproduced on the external electronic device (310) from the external electronic device (310); and
display, through the display (160), an extended screen (350) of the first execution screen (315) received from the external electronic device (310),
wherein the extended screen (350) of the first execution screen (315) is configured to be controllable through a gaze and/or a gesture of the user of the wearable electronic device (101), and
wherein the external electronic device (310) is configured to be controllable through a paired peripheral device (320).

2. The wearable electronic device of claim 1, wherein the instructions, when executed by the at least one processor (120), cause the wearable electronic device (101) to display, on the display (160), the extended screen (350) of the first execution screen (315) in case that a second execution screen (710) is not displayed on the display (160).

3. The wearable electronic device of claim 1, wherein the instructions, when executed by the at least one processor (120), cause the wearable electronic device (101) to:
in case that the extended screen (350) of the first execution screen (315) is displayed on the display (160) while a second execution screen (710) is displayed on the display (160),
move the second execution screen (710) from a first direction to a second direction and position the extended screen (350) of the first execution screen (315) in the first direction; and
deform the second execution screen (720) moved from the first direction to the second direction so as to be distinguished from the extended screen (350) of the first execution screen (315).

4. The wearable electronic device of claim 1, wherein the instructions, when executed by the at least one processor (120), cause the wearable electronic device (101) to:
in case that the extended screen (350) of the first execution screen (315) is displayed on the display (160) while a second execution screen (710) is displayed on the display (160),
arrange the extended screen (350) of the first execution screen (315) and the second execution screen (710) such that the extended screen (350) of the first execution screen (315) and the second execution screen (710) do not overlap each other; and
deform the extended screen (350) of the first execution screen (315) and the second execution screen (710).

5. The wearable electronic device of claim 1, wherein the instructions, when executed by the at least one processor (120), cause the wearable electronic device (101) to:
in case that the gaze coordinates are recognized at a corner of a first window (910) in the extended screen (350) of the first execution screen (315) displayed on the display (160), display a first size adjustment icon (901) for adjusting a size of the first window (910) through the gesture; and
in case that the gaze coordinates are recognized at a corner of a second window (920) in the extended screen (350) of the first execution screen (315), display a second size adjustment icon (1001) for adjusting a size of the second window (920) through the gesture.

6. The wearable electronic device of claim 1, wherein the instructions, when executed by the at least one processor (120), cause the wearable electronic device (101) to, in case that the extended screen (350) of the first execution screen (315) displayed on the display (160) includes three-dimensional content (1210), expand a recognition range of the gaze coordinates so as to correspond to the three-dimensional content (1210).

7. The wearable electronic device of claim 1, wherein the instructions, when executed by the at least one processor (120), cause the wearable electronic device (101) to:
display at least one application (1310) available in the wearable electronic device (101) on the extended screen (350) of the first execution screen (315) displayed on the display (160); and
in case that the gaze coordinates corresponding to the at least one application (1310) are recognized for a designated time, pop up, highlight, or enlarge the at least one application.

8. The wearable electronic device of claim 1, wherein the instructions, when executed by the at least one processor (120), cause the wearable electronic device (101) to:
identify a type of content of the first execution screen (315) being reproduced on the external electronic device (310);
in case that the first execution screen (315) includes first content, receive the first content through mirroring from the external electronic device (310);
in case that the first execution screen (315) includes second content, receive the second content through casting from the external electronic device (310);
release pairing between the external electronic device (310) and the peripheral device (320); and
perform pairing between the wearable electronic device (101) and the peripheral device (320).

9. A method for controlling a wearable electronic device (101), the method comprising:
performing, by the wearable electronic device (101), pairing with an external electronic device (310) through a communication circuit (190);
recognizing an external electronic device (320) by the wearable electronic device (101);
transferring, to the external electronic device (310), information related to gaze coordinates and/or gesture coordinates of a user of the wearable electronic device (101);
based on the information related to the gaze coordinates and/or the gesture coordinate, receiving, through mirroring, a first execution screen (315) being reproduced on the external electronic device (310) from the external electronic device (310);
displaying, through a display (160), an extended screen (350) of the first execution screen (315) received from the external electronic device (310);
controlling the extended screen (350) of the first execution screen (315) through a gaze and/or a gesture of the user of the wearable electronic device (101); and
controlling the external electronic device (310) through a peripheral device (320) paired with the external electronic device (310).

10. The method of claim 9, further comprising displaying the extended screen (350) of the first execution screen (315) on the display (160) in case that a second execution screen (710) is not displayed on the display (160).

11. The method of claim 9, further comprising:
in case that the extended screen (350) of the first execution screen (315) is displayed on the display (160) while a second execution screen (710) is displayed on the display (160),
moving the second execution screen (710) from a first direction to a second direction and positioning the extended screen (350) of the first execution screen (315) in the first direction; and
deforming the second execution screen (720) moved from the first direction to the second direction so as to be distinguished from the extended screen (350) of the first execution screen (315).

12. The method of claim 9, further comprising:
in case that the extended screen (350) of the first execution screen (315) is displayed on the display (160) while a second execution screen (710) is displayed on the display (160),
arranging the extended screen (350) of the first execution screen (315) and the second execution screen (710) such that the extended screen (350) of the first execution screen (315) and the second execution screen (710) do not overlap each other; and
deforming the extended screen (350) of the first execution screen (315) and the second execution screen (710).

13. The method of claim 9, further comprising:
in case that the gaze coordinates are recognized at a corner of a first window (910) in the extended screen (350) of the first execution screen (315) displayed on the display (160), displaying a first size adjustment icon (901) for adjusting a size of the first window (910) through the gesture; and
in case that the gaze coordinates are recognized at a corner of a second window (920) in the extended screen (350) of the first execution screen (315), displaying a second size adjustment icon (1001) for adjusting a size of the second window (920) through the gesture.

14. The method of claim 9, further comprising, in case that the extended screen (350) of the first execution screen (315) displayed on the display (160) includes three-dimensional content (1210), expanding a recognition range of the gaze coordinates so as to correspond to the three-dimensional content (1210).

15. The method of claim 9, further comprising:
displaying, on the extended screen (350) of the first execution screen (315) displayed on the display (160), at least one application (1310) available in the wearable electronic device (101); and
in case that the gaze coordinates corresponding to the at least one application (1310) are recognized for a designated time, popping up, highlighting, or enlarging the at least one application.
